(19) Europäisches Patentamt / European Patent Office / Office européen des brevets

(11) **EP 3 967 475 B1**

(12) **EUROPÄISCHE PATENTSCHRIFT**

(45) Veröffentlichungstag und Bekanntmachung des Hinweises auf die Patenterteilung:
**29.05.2024   Patentblatt 2024/22**

(21) Anmeldenummer: **21195871.5**

(22) Anmeldetag: **10.09.2021**

(51) Internationale Patentklassifikation (IPC):
*B29C 64/153* (2017.01)   *B22F 12/90* (2021.01)
*B22F 12/50* (2021.01)   *B22F 12/00* (2021.01)
*B22F 10/85* (2021.01)   *B22F 10/28* (2021.01)
*B33Y 50/02* (2015.01)   *B33Y 30/00* (2015.01)
*B33Y 10/00* (2015.01)   *B29C 64/393* (2017.01)
*B29C 64/321* (2017.01)   *B29C 64/25* (2017.01)
*B29C 64/227* (2017.01)   *B29C 64/194* (2017.01)
*B22F 10/34* (2021.01)   *B22F 10/37* (2021.01)

(52) Gemeinsame Patentklassifikation (CPC):
(C-Sets verfügbar)
**B29C 64/153; B22F 10/34; B22F 10/37;
B22F 12/38; B22F 12/50; B22F 12/90;
B29C 64/194; B29C 64/227; B29C 64/25;
B29C 64/321; B29C 64/393; B33Y 10/00;
B33Y 30/00; B33Y 50/02;** B22F 10/28;   (Forts.)

(54) **VORRICHTUNG UND VERFAHREN ZUR ADDITIVEN FERTIGUNG VON BAUTEILEN IN UMGEBUNGEN MIT UNTERSCHIEDLICHER GRAVITATION UND MIT MATERIAL UNTERSCHIEDLICHER FLIESSFÄHIGKEIT**

DEVICE AND METHOD FOR THE ADDITIVE PRODUCTION OF COMPONENTS IN ENVIRONMENTS WITH DIFFERENT GRAVITATION AND WITH MATERIAL OF DIFFERENT FLUIDITY

DISPOSITIF ET PROCÉDÉ DE FABRICATION ADDITIVE DE COMPOSANTS DANS DES ENVIRONNEMENTS À GRAVITATION DIFFÉRENTE ET À APTITUDE À L'ÉCOULEMENT DIFFÉRENTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.09.2020   DE 102020123753**

(43) Veröffentlichungstag der Anmeldung:
**16.03.2022   Patentblatt 2022/11**

(73) Patentinhaber: **Deutsches Zentrum für Luft- und Raumfahrt e.V.**
**53227 Bonn (DE)**

(72) Erfinder:
• **D'Angelo, Olfa**
  **75020 Paris (FR)**
• **Meyer, Andreas**
  **51147 Köln (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
**EP-A1- 3 281 729        WO-A1-2019/169511
DE-A1-102016 201 086    DE-A1-102017 207 769
US-A1- 2007 145 629**

(52) Gemeinsame Patentklassifikation (CPC): (Forts.)
B22F 2999/00; B29C 64/124; Y02P 10/25

C-Sets
B22F 2999/00, B22F 10/34, B22F 12/37,
B22F 12/222, B22F 12/226;
B22F 2999/00, B22F 12/38, B22F 12/30,
B22F 12/222, B22F 12/226;
B22F 2999/00, B22F 12/38, B22F 12/30,
B22F 12/226, B22F 2202/01

**Beschreibung**

Die Erfindung betrifft Vorrichtung und Verfahren zur additiven Fertigung von Bauteilen in Umgebungen mit geringer Gravitation oder fehlender Gravitation.

Gemäß dem Standard ISO/ASTM 52900:2015, der die Terminologie für die additive Fertigung festlegt, umfassen additive Fertigungsverfahren Herstellungsprozesse, die auf dem zumeist schichtweisen Zusammenfügen von Materialien zur Herstellung von Objekten aus 3D-Modelldaten basieren. Additive Fertigungsverfahren weisen je nach Anwendungsfall gegenüber herkömmlichen Fertigungsverfahren Vorteile auf und ermöglichen die Realisierung komplexer Bauteile. Insbesondere ist es mit additiven Fertigungsverfahren möglich, komplexe Strukturen zu schaffen, die unter Umständen mit subtraktiven oder formgebenden Fertigungsverfahren nicht realisierbar sind. Grundsätzlich ermöglichen es additive Fertigungsverfahren ferner, Bauteile verschiedener Formen auf Abruf mit derselben Fertigungsmaschine zu produzieren. Ferner bieten additive Fertigungsverfahren die Möglichkeit, den Materialverschnitt zu reduzieren. Aufgrund ihrer hohen Formgebungsflexibilität erfahren additive Fertigungsverfahren auch eine zunehmende Relevanz für die Raumfahrt. Durch den Einsatz additiver Fertigungsverfahren können Bauteile, beispielsweise Ersatzteile oder Werkzeuge, an entlegenen und schwer erreichbaren Orten auf einfache Weise hergestellt werden.

Zu den vorherrschenden Technologien auf dem Gebiet der additiven Fertigung gehören filamentbasierte Verfahren und pulverbasierte Verfahren. Bei filamentbasierten Verfahren wird ein geschmolzenes Fertigungsmaterial extrudiert wird, um ein Bauteil Schicht für Schicht aufzubauen (vgl. US 5,121,329 A). Bei pulverbasierten Verfahren wird ein pulverförmiges Fertigungsmaterial schichtweise abgelagert und selektiv verfestigt (vgl. US 4,863,538 A und US 5,204,055 A).

Im Allgemeinen neigt die additive Fertigung als erst seit kurzer Zeit bekanntes Fertigungsverfahren zu einer hohen Fehleranfälligkeit, die beispielsweise auf heterogene Ablagerung von Fertigungsmaterial oder auf Temperaturgradienten während der Verfestigung des Fertigungsmaterials zurückzuführen ist. Die Homogenität des abgelagerten Fertigungsmaterials (in Bezug auf das Fertigungsmaterial zur Erzielung einer homogenen Dichte, oder in Bezug auf die Erstarrungsparameter zur Erzielung eines homogenen Gefüges) ist ein Schlüsselparameter für die Qualität eines mittels additiver Fertigung hergestellten Bauteils. Alle zurzeit industriell eingesetzten additiven Fertigungsverfahren machen sich insbesondere die Gravitationskraft zu Nutze, um das Fertigungsmaterials abzulagern, wobei für ein möglichst homogenes Ablagern, Fertigungsmaterial mit einer sehr guten Fließfähigkeit verwendet wird.

Pulverbasierte additive Fertigungsverfahren lassen sich in drei Kategorien einteilen: Direct Energy Deposition (DED), Selective Laser Melting (SLM) und Selective Laser Sintering (SLS). DED basiert auf der lokalisierten Abgabe von Partikeln in einen fokussierten Laserstrahl, der ein pulverförmiges Fertigungsmaterial direkt verfestigt (vgl. US 6,476,343 B2, US 6,046,426 A und WO 2014/053277 A2). SLM und SLS verwenden ein pulverförmiges Fertigungsmaterial mit einer sehr hohen Fließfähigkeit, um Fertigungsmaterial-Schichten mit einer hohen Dichte mittels Schwerkraft homogen abzulagern. Die abgelagerten Schichten werden dann selektiv abschnittsweise verfestigt, um ein gewünschtes Bauteil innerhalb eines Pulverbetts herzustellen (vgl. US 4,863,538 A und US 5,204,055 A).

Ferner ist aus DE 10 2017 207 769 A1 eine Fertigungsmaschine und ein additives Fertigungsverfahren zur Herstellung von Bauteilen in Bereichen mit reduzierter Schwerkraft bekannt, wobei eine Fertigungskammer vollständig mit Fertigungsmaterial gefüllt ist und eine Wand der Fertigungskammer bewegbar ist, um das Volumen der Fertigungskammer zur Vereinfachung der Bewegung einer in der Fertigungskammer angeordneten Fertigungsplattform zu vergrößern. Aus DE 10 2016 201 086 A1 ist ein weiteres additives Fertigungssystem und ein Prüfverfahren für additiv gefertigte Bauteile bekannt und US 2007/0145629 A1 offenbart ein Fertigungsverfahren und eine Vorrichtung zur Herstellung miniaturisierter oder mikrostrukturierter Objekte. Zudem ist aus WO 2019 / 169511 A1 eine 3D-Drucker-Einweg-Patrone und aus EP 3 281 729 A1 Pulverbettschmelzvorrichtung und ein Pulverzufuhrverfahren zur Bereitstellung von Rohmaterialpulver an eine Pulverauftragsvorrichtung einer Pulverbettschmelzvorrichtung bekannt.

Um funktionsfähige Bauteile herzustellen, ist bei pulverbasierten Verfahren die homogene Ablagerung des pulverförmigen Fertigungsmaterials eine wesentliche Voraussetzung. Um eine homogene Ablagerung des pulverförmigen Fertigungsmaterials zu erreichen, werden kommerziell Pulver mit hoher Fließfähigkeit sowie die Schwerkraft genutzt. Ein pulverförmiges Fertigungsmaterial wird als besonders fließfähig qualifiziert, wenn es die folgenden physikalischen Eigenschaften aufweist:

- Die Partikel haben eine glatte Oberflächenstruktur, d. h. eine möglichst geringe Oberflächenrauhigkeit und kaum Unregelmäßigkeiten (geringe Reibung zwischen den Partikeln).
- Die Partikel haben eine perfekte Kugelform, um mechanische Blockierungen zwischen den Partikeln zu verhindern.

Um eine Ablagerung von hochdichten Schichten zu ermöglichen, wird darüber hinaus die Dispersität der Korngröße des Pulvers gesteuert.

Diese Eigenschaften zeigen deutlich, dass ein pulverförmiges Fertigungsmaterial mit einer hohen Fließfähigkeit speziell hergestellt und gelagert werden muss. Die Mischung von pulverförmigem Fertigungsmaterial aus verschiedenen Produktionschargen oder die Verwendung von recyceltem pulverförmigem Fertigungsmaterial ist dadurch erheblich erschwert bzw. führt zu qualitativ minderwertigen Bauteilen.

Ein Ziel der Raumfahrtindustrie ist die direkte Fertigung und Montage von kleinen bis großen Bauteilen im Weltraum. In-Space Manufacturing (ISM) hat das Potenzial, die Weltraumforschung erheblich zu unterstützen, da es für die Wartung, Reparatur und Produktion von Objekten eingesetzt werden kann, ohne auf Bodenunterstützung angewiesen zu sein. Dadurch kann die Selbsterhaltungsfähigkeit während Missionen im Weltraum verbessert werden. Das Vorhandensein autonomer Fertigungsfähigkeiten im Weltraum eröffnet auch die Möglichkeit, Bauteile von vornherein an ihre endgültige Funktion in einer Umgebung ohne Schwerkraft anzupassen, anstatt sie dahingehend auszulegen, um beispielsweise der terrestrischen Schwerkraft und die hohen Beschleunigungen beim Start einer Rakete in den Weltraum wirkende Gewichtskraft zu widerstehen.

ISM ermöglicht die Verwendung von leichteren Strukturen, wodurch ein Start einer Rakete in ökologischer und ökonomischer Sicht verbessert werden kann.

Weltraummissionen sind insbesondere durch Ladekapazitäten begrenzt. Durch ISM kann die Dauer und somit Reichweite von Missionen erhöht werden.

Für die direkte Fertigung von Bauteilen im Weltraum wäre es von besonderem Vorteil, alte Bauteile (Weltraumschrott) zu recyceln und In-Situ-Ressourcen, die beispielsweise auf einer Planetenoberfläche, insbesondere Planetenboden (Regolith), gefunden werden, zu nutzen.

Im Weltraum stellt die verminderte oder fehlende Schwerkraft eine große Herausforderung für die Anpassung der auf der Erde angewandten Fertigungsprozesse dar. Insbesondere pulverbasierte additive Fertigungsverfahren machen sich als wesentlicher Prozessschritt die Schwerkraft zunutze, was eine Anwendung dieser Fertigungsverfahren im Weltraum erschwert. Fused Deposition Modeling (FDM), ein filamentbasiertes additives Fertigungsverfahren, war daher das erste additive Fertigungsverfahren, das im Weltraum eingesetzt wurde (vgl. US 9,656,426 B2).

Derzeit gibt es zwei additive Fertigungsverfahren, die bei reduzierter und fehlender Schwerkraft erprobt wurden: a) Das oben genannte filamentbasierte Fertigungsverfahren wird derzeit im Rahmen der Additive Manufacturing Facility (AMF) auf der ISS angewendet, und b) Ein pulverbasiertes SLM-Fertigungsverfahren, bei dem das Pulverbett durch Druckdifferenz stabilisiert wird (DE 10 2012 109 262 A1).

Bei dem vorbekannten pulverbasierten additiven Fertigungsverfahren gemäß DE 10 2012 109 262 A1 wurde die Abscheidung und Ablagerung des pulverförmigen Fertigungsmaterials durch eine Gasströmung unterstützt. Das Pulverbett wird stabilisiert, indem eine Druckdifferenz zwischen den beiden Enden des Pulverbetts erzeugt wird. Dazu wird eine Saugpumpe zur Erzeugung eines Vakuums in Richtung einer Fertigungsplattform am Boden des Pulverbetts vorgesehen. Die pulverförmigen Partikel werden somit in Richtung der Fertigungsplattform angezogen. Auf diese Weise wird das Pulverbett stabilisiert. Ferner ist die Dicke der vertikalen Wände der Bauteile begrenzt, da große geschlossene Oberflächen den Gasstrom daran hindern, durch das Bauteil zu strömen und zur nächsten abgeschiedenen Pulverschicht zu gelangen. Die Bauteile werden daher in der Regel mit einer offenen Struktur, z.B. Wabenstruktur, entlang der vertikalen Achse hergestellt, um sicherzustellen, dass keine geschlossenen Oberflächen auf der Achse, entlang der der Gasstrom strömt, vorhanden sind. Ferner geht die Realisierung des Gasstroms mit einem hohen vorrichtungstechnischen Aufwand einher.

Das beschriebene Verfahren basiert genauso wie andere pulverbasierte additive Fertigungsverfahren auf pulverförmiges Fertigungsmaterial mit einer hohen Fließfähigkeit, so dass es notwendig ist, das Fertigungsmaterial mitzuführen und während einer Weltraummission adäquat zu lagern. Dabei müssen bestimmte Lagerbedingungen des Fertigungsmaterials eingehalten werden, um Korrosion, Verunreinigung oder Materialaustausch aufgrund eines längeren Kontakts zwischen den Partikeln, was ein Verklumpen des Fertigungsmaterials verursachen kann, zu vermeiden. Die Wiederverwendung von Fertigungsmaterial aus einer früheren Charge bzw. von übriggebliebenem Fertigungsmaterial aus einem früheren Fertigungsprozess ist nicht möglich, da bei der Verfestigung des Bauteils auch Partikelcluster im Pulverbett um das Bauteil herum auftreten. Das gesamte einmal abgeschiedene Fertigungsmaterial, einschließlich des Pulvers, das nicht zur Herstellung eines Bauteils verwendet wurde, muss nach jeder Charge weggeworfen werden, um Defekte bei den zukünftigen Abscheidungen und Ablagerungen von Fertigungsmaterial zu vermeiden.

Ferner geben aus dem Stand der Technik bekannte Überwachungssysteme keinen Aufschluss über die Qualität der Materialablagerung. Zwar kann die Qualität einer Fertigungsmaterial-Schicht anhand von Referenzdaten durch Vergleichsoperationen überprüft werden, jedoch ermöglichen diese Verfahren kein aktives Auffinden von Fehlern, um deren Entstehung frühzeitig entgegenzuwirken. Mit anderen Worten ist mit den im Stand der Technik verwendeten Überwachungsverfahren lediglich die Erkennung eines Fehlers in einer bereits verfestigten Fertigungsmaterial-Schicht möglich, so dass zum Beispiel spätere Schichten modifiziert werden können, jedoch ist keine Echtzeiterkennung von Fehlern in einer Fertigungsmaterial-Schicht während dessen Verfestigung möglich.

Es mangelt somit an effizienten additiven Fertigungsverfahren, die für den Einsatz in einer Umgebung mit geringer oder fehlender Schwerkraft geeignet sind.

Sofern nicht konkrete Quellen angegeben sind, wird zuvor der allgemeine Kenntnisstand des Anmelders beschrieben, der jedoch nicht notwendigerweise veröffentlicht und somit Stand der Technik ist.

Aufgabe der vorliegenden Erfindung ist es, eine gegenüber dem Stand der Technik verbesserte additive, insbesondere pulverbasierte additive, Fertigungsmaschine sowie ein gegenüber dem Stand der Technik verbessertes additives, insbesondere pulverbasiertes additives, Fertigungsverfahren bereitzustellen, wobei die Fertigungsmaschine bzw. das Fertigungsverfahren für den Einsatz in einer Umgebung mit geringer oder fehlender Schwerkraft geeignet ist. Die Fertigungsmaschine und das Fertigungsverfahren sollen es darüber hinaus ermöglichen, dass eine Anpassung an unterschiedliche Gravitationslevel und/oder an unterschiedliche Fließfähigkeiten von Fertigungsmaterial erfolgen kann.

Die erfindungsgemäße Fertigungsmaschine ist durch die Merkmale des Anspruchs 1 definiert. Das erfindungsgemäße additive Fertigungsverfahren ist durch die Merkmale des Anspruchs 11 definiert.

Die Fertigungsmaschine für additive Fertigungsverfahren gemäß der vorliegenden Erfindung umfasst:

- eine eine Wandung aufweisende geschlossene Fertigungskammer zur Aufnahme von partikelförmigem Fertigungsmaterial, wobei die Fertigungskammer einen Fertigungsraum bildet, an dessen Wandung mindestens einen Energieeinbringungsabschnitt angeordnet ist, wobei durch den mindestens einen Energieeinbringungsabschnitt Umwandlungsenergie mindestens einer Energiequelle in den Fertigungsraum einbringbar ist,
- mindestens eine Zuführvorrichtung zum Zuführen des partikelförmigem Fertigungsmaterials in den Fertigungsraum,
- mindestens eine in der Fertigungskammer angeordnete Fertigungsplattform, die den Fertigungsraum zumindest teilweise begrenzt und an der Fertigungsmaterial ablagerbar ist, wobei die Fertigungsplattform in der Fertigungskammer verfahrbar ist, um das Fertigungsmaterial zu formen, und
- mindestens eine Antriebsvorrichtung, mit der die Fertigungskammer oder ein Teil der Fertigungskammer bezüglich mindestens eines Freiheitsgrads bewegbar ist, sodass das Fertigungsmaterial in einen gewünschten Bereich in den Fertigungsraum gelangt und homogen im gewünschten Bereich verteilt wird.

Das partikelförmige Fertigungsmaterial kann ein pulverförmiges Fertigungsmaterial sein. Das partikelförmige Fertigungsmaterial kann auch zumindest teilweise ein körniges Fertigungsmaterial sein bzw. umfassen. Unter einem pulverförmigen Fertigungsmaterial wird ein Fertigungsmaterial mit einer hohen Homogenität hinsichtlich der Partikelgrößen, insbesondere mit einer geringen Oberflächenrauheit und einer hohen Fließfähigkeit, verstanden. Unter einem körnigen Fertigungsmaterial wird ein Fertigungsmaterial mit einer vergleichsweise hohen Oberflächenrauheit verstanden, welches unter Umständen verschiedene Korngrößen aufweisen kann, d. h. eine vergleichsweise geringe Homogenität hinsichtlich der Partikelgrößen, und auch eine verglichen mit pulverförmigem Fertigungsmaterial geringere Fließfähigkeit aufweisen kann.

Pulverförmiges Fertigungsmaterial kann insbesondere für planbare Fertigungsvorhaben oder als Reservevorrat auf Raumfahrtmissionen mitgeführt werden. Körniges Fertigungsmaterial kann beispielsweise durch Recyceln von gefertigten und nicht mehr benötigten Bauteilen beispielsweise während einer Raumfahrtmissionen hergestellt werden, beispielsweise durch Zerkleinern oder Zermahlen eines Bauteils. Auch können auf Raumfahrtmissionen beispielsweise geeignete Materialien, die im Weltraum (Weltraumschrott oder Material von Planetenoberflächen) vorgefunden werden, auf diese Weise verarbeitet werden.

Die Umwandlungsenergie kann insbesondere in Form von elektromagnetischer Strahlung in einem vorgegebenem Wellenlängenbereich zur Verfügung gestellt werden, beispielsweise durch einen Laser als Energiequelle, und von außerhalb der Fertigungskammer in das Innere der Fertigungskammer bzw. in den Fertigungsraum eingeleitet werden, um das Fertigungsmaterial beispielsweise selektiv zu sintern oder zu schmelzen, wobei sich das Fertigungsmaterial anschließend durch Abkühlen verfestigt. Der Energieeinbringungsabschnitt ist insbesondere transmissiv für die elektromagnetische Strahlung in dem vorgegebenen Wellenlängenbereich. Vorzugsweise beträgt der Transmissionsgrad des Energieeinbringungsabschnitts für die elektromagnetische Strahlung im vorgegebenen Wellenlängenbereich mindestens 80 %. Alternativ oder zusätzlich kann Umwandlungsenergie in Form von Wärme eingesetzt werden, wobei in diesem Fall der Energieeinbringungsabschnitt wärmeleitfähig ist, um eine Erwärmung von an der Fertigungsplattform abgelagertem Fertigungsmaterial zu ermöglichen.

Die Energiequelle kann insbesondere verfahrbar ausgebildet sein, um beispielsweise eine selektive Einbringung von Umwandlungsenergie zu ermöglichen oder eine Wartung bzw. Reinigung des Energieeinbringungsabschnitts zu ermöglichen. Dadurch kann während des Schmelzens oder des Sinterns gezielt Energie in vorgesehene Bereiche eingebracht werden, insbesondere um eine vordefinierte Geometrie eines Bauteils zu realisieren. Mit anderen Worten: Die selektive Einbringung der Umwandlungsenergie erlaubt es, durch ein gezieltes Sintern bzw. Schmelzen von Fertigungsmaterial, komplexe Bauteilformen zu realisieren. Ferner kann die Energiequelle bei einer verfahrbaren Ausgestaltung, von dem Energieeinbringungsabschnitt weggefahren werden, sodass eine verbesserte Kühlung erreicht werden kann.

Durch das Vorsehen einer geschlossenen Fertigungskammer wird vermieden, dass ein Benutzer der Fertigungsmaschine mit möglicherweise gesundheitsgefährdenden Nebenprodukten oder gefährlichen Teilen der Fertigungsmaschine während eines Fertigungsprozesses in Kontakt kommt. Ferner wird eine Kontamination der Umwelt in vorteilhafter Weise vermieden. Gleichzeitig wird eine Verunreinigung des Fertigungsmaterials in der Fertigungskammer vermieden. Bei dem Einsatz in Umgebungen mit geringer oder fehlender Schwerkraft wird durch das Vorsehen einer geschlossenen Fertigungskammer ferner der Raum begrenzt, in dem Fertigungsmaterial davonschweben kann.

Die in der Fertigungskammer verfahrbare Fertigungsplattform erlaubt es in vorteilhafter Weise, die Ablagerung von Fertigungsmaterial zu steuern. Gleichzeitig stellt die Fertigungsplattform eine Basis dar, an der das Bauteil fertigbar ist. Energiequelle und Fertigungsplattform können, da das Bauteil an der Fertigungsplattform gefertigt werden soll, aneinander angepasst sein, so dass Umwandlungsenergie in Richtung des Fertigungsmaterials, das sich an der Fertigungsplattform abgelagert hat, gezielt eingeleitet werden kann.

Das Vorsehen mindestens einer Antriebsvorrichtung zur Bewegung eines Teils der Fertigungskammer oder der Fertigungskammer ermöglicht, beispielsweise durch Vibrieren oder Rütteln, dass das Fertigungsmaterial in einen gewünschten Bereich in den Fertigungsraum gelangt und homogen im gewünschten Bereich verteilt wird. Der gewünschte Bereich für das Fertigungsmaterial kann der Bereich zwischen dem Energieeinbringungsabschnitt und der Fertigungsplattform sein. Dadurch kann eine homogene Fertigungsmaterial-Schicht an der Fertigungsplattform ausgebildet werden, die anschließend durch Einbringung der Umwandlungsenergie geschmolzen bzw. gesintert werden, um anschließend abgekühlt und zu dem gewünschten Bauteil verfestigt zu werden. Dies gewährleistet eine hohe Qualität eines mittels dieses Verfahren gefertigten Bauteils. Ferner ist kein Gasstrom oder Ähnliches erforderlich, um eine homogene Ablagerung von Fertigungsmaterial zu realisieren, so dass der vorrichtungstechnische Aufwand reduziert ist. Die durch die Antriebsvorrichtung hervorgerufenen Bewegungen der Fertigungskammer können insbesondere an vorherrschende Umgebungsbedingungen, beispielsweise an die Schwerkraft, oder an die Eigenschaften des Fertigungsmaterials angepasst werden. Somit ist es möglich, die erfindungsgemäße Fertigungsmaschine auch in Umgebungen mit geringer oder fehlender Schwerkraft einzusetzen, ohne die Qualität eines zu fertigenden Bauteils zu beeinträchtigen. Die erfindungsgemäße Fertigungsmaschine ist somit vielfältig und flexibel einsetzbar. Es können auch mehrere Antriebsvorrichtungen vorgesehen sein, die unterschiedliche Bewegungen eines Teils der Fertigungskammer oder der Fertigungskammer bewirken.

Vorzugsweise wird ein den Fertigungsraum begrenzender Wandabschnitt der Fertigungskammer von der mindestens einen Antriebsvorrichtung bezüglich mindestens eines Freiheitsgrads bewegt. Der Wandabschnitt, der somit der Teil der Fertigungskammer ist, kann beispielsweise den Boden der Fertigungskammer sein und kann beispielsweise plattenförmig ausgebildet sein. Der Wandabschnitt kann auch den Energieeinbringungsabschnitt aufweisen. Der Wandabschnitt liegt vorzugsweise der Fertigungsplattform gegenüber.

Vorzugsweise ist vorgesehen, dass die Wandung der Fertigungskammer starr ausgebildet ist.

Eine starre Fertigungskammer erlaubt es in vorteilhafter Weise, einen Druckunterschied zwischen dem Raum in der Fertigungskammer bzw. in dem Fertigungsraum und der Umgebung zu schaffen. Abhängig von den physikalischen Eigenschaften des Fertigungsmaterials kann dies von Vorteil sein, um die Qualität eines zu fertigenden Bauteils zu erhöhen. Ferner wird dadurch die Steuerbarkeit der räumlichen Verteilung bzw. Ablagerung von Fertigungsmaterial in dem Fertigungsraum mittels der Antriebsvorrichtung vereinfacht.

Ferner kann vorgesehen sein, dass der Teil der Fertigungskammer oder die Fertigungskammer durch die Antriebsvorrichtung bezüglich mindestens eines rotatorischen Freiheitsgrads rotatorisch bewegbar ist und bezüglich mindestens eines translatorischen Freiheitsgrads translatorisch bewegbar ist, oder dass die Fertigungskammer durch die Antriebsvorrichtung bezüglich mindestens zwei translatorischer Freiheitsgrade translatorisch bewegbar ist.

Die Freiheitsgrade für die Bewegung des Teils der Fertigungskammer oder der Fertigungskammer sind anhand einer Hauptachse der Fertigungskammer definiert, wobei die Hauptachse der Fertigungskammer der Mittelachse der Fertigungsplattform entspricht, die sich bei einem Einsatz in einer Umgebung mit Schwerkraft, in Schwerkraftrichtung (d. h. vertikal) erstreckt. Die Hauptachse der Fertigungskammer bzw. die Mittelachse der Fertigungsplattform erstreckt sich somit und orthogonal zu der Oberfläche der Fertigungsplattform, auf der Fertigungsmaterial ablagerbar ist.

In Bezug auf die Hauptachse kann es einen translatorischen Freiheitsgrad in Richtung der Hauptachse und insbesondere translatorische Freiheitsgrade orthogonal zur Hauptachse geben, und einen rotatorischen Freiheitsgrad um die Hauptachse. Eine Bewegung des Teils der Fertigungskammer oder der Fertigungskammer, die sich orthogonal zur Hauptachse erstreckt, kann insbesondere zwei translatorische Freiheitsgrade kombinieren, wodurch eine ebene Bewegung orthogonal zur Hauptachse ermöglicht wird.

Um eine möglichst homogene Ablagerung von Fertigungsmaterial zur Bildung von homogenen Fertigungsmaterial-Schichten zu gewährleisten, hat sich als besonders vorteilhaft herausgestellt, wenn der Teil der Fertigungskammer oder die Fertigungskammer durch die mindestens eine Antriebsvorrichtung um die Hauptachse rotatorisch bewegbar ist und orthogonal zur Hauptachse translatorisch bewegbar ist. Durch eine translatorische Bewegung orthogonal zur Hauptachse, kann insbesondere das Fertigungsmaterial in einen gewünschten Bereich der Fertigungskammer, beispielsweise in einen Bereich zwischen der Fertigungsplattform und dem Energieeinbringungsabschnitt, getrieben werden. Beispielsweise kann dies durch ein Vibrieren oder Rütteln der Fertigungskammer in erfolgen, wodurch Partikel des Fertigungsmaterials aufgelockert werden und gegenseitige mechanische Blockaden bzw. Verklemmungen der Partikel gelöst werden, um die Fließfähigkeit des Fertigungsmaterials zu gewährleisten. Ein Teil des Fertigungsmaterials kann dann an der Fertigungsplattform anhaften. Durch eine Rotation um die Hauptachse der Fertigungskammer, kann nicht an der Fertigungsplattform anhaftendes (überschüssiges) Fertigungsmaterial anschließend unter der Wirkung von Fliehkräften entfernt werden, so dass eine homogene Fertigungsmaterial-Schicht an der Fertigungsplattform verbleibt.

Ferner hat herausgestellt, dass, wenn die Fertigungskammer durch die Antriebsvorrichtung zusätzlich translatorisch entlang der Hauptachse bewegbar ist, Partikel des Fertigungsmaterials aufgelockert und gegenseitige mechanische Blockaden bzw. Verklemmungen der Partikel gelöst werden können, um die Fließfähigkeit des Fertigungsmaterials zu gewährleisten.

Durch die Bewegung des Teils der Fertigungskammer oder der Fertigungskammer kann eventuell vorhandene Reibung zwischen den Partikeln des partikelförmigen Fertigungsmaterials und eventuell zwischen den Partikeln und der Wandung der Fertigungskammer bzw. der Fertigungsplattform überwunden werden, so dass ein kontinuierlicher Fertigungsmaterialfluss gewährleistet werden kann. Ferner können zwischen den Partikeln und/oder zwischen den Partikeln und der Wandung, insbesondere bei einem Einsatz in der Schwerelosigkeit, Impulse übertragen und ggfs. Reibung erzeugt werden, um eine homogene Ablagerung von Fertigungsmaterial zu unterstützen. Insbesondere ein Rütteln oder Vibrieren der Fertigungskammer hat sich dabei als besonders vorteilhaft herausgestellt.

Besonders bevorzugt, weist die Antriebsvorrichtung eine Vibrationseinrichtung auf. Eine Vibrationseinrichtung ist eine Einrichtung, mit der beispielsweise mittels eines Vibrationsmotors eine rotatorische Bewegung einer Schwungmasse des Vibrationsmotors hervorgerufen wird, durch die Vibrationsbewegungen hervorgerufen werden, die auf umliegende Bauteile übertragen wird.

Vibrationen haben sich zur Ausbildung homogener Fertigungsmaterial-Schichten als besonders vorteilhaft erwiesen. Somit kann, insbesondere durch Vibrationen orthogonal zur Hauptachse der Fertigungskammer, eine besonders hohe Homogenität der Fertigungsmaterial-Schichten erreicht werden.

Bei der vorliegenden Erfindung ist insbesondere vorgesehen, dass durch die Bewegung des Teils der Fertigungskammer oder der Fertigungskammer erreicht wird, dass sich das Fertigungsmaterial bewegt und sich als Fertigungsmaterialschicht ablagert. Dieser Vorgang ist im Wesentlichen unabhängig von der Fließfähigkeit des Fertigungsmaterials. Somit kann mit der vorliegenden Erfindung nahezu jedes Fertigungsmaterial, unabhängig von der Form und Größe der Partikel, der Homogenität des Materials und der Fließfähigkeit des Materials verwendet werden.

Vorzugsweise ist vorgesehen, dass die Fertigungsplattform ein Substrat zur Ablagerung von Fertigungsmaterial aufweist.

Ein Substrat an der Oberfläche der Fertigungsplattform ermöglicht, dass das Fertigungsmaterial an der Fertigungsplattform auf dem Substrat anhaftet.

Die Fertigungskammer kann eine Abschlussplatte aufweisen. Über die Abschlussplatte kann die Fertigungskammer verschlossen sein. Die Fertigungskammer kann beweglich in Richtung der Hauptachse ausgebildet sein. Die Abschlussplatte kann das Fertigungsmaterial in Richtung des Fertigungsraums drücken. Die Abschlussplatte kann auch Teil der Zuführvorrichtung sein.

Vorzugsweise ist die Fertigungsplattform iterativ um vordefinierte Verfahrwege verfahrbar, wobei die vordefinierten Verfahrwege durch einen Benutzer anpassbar sind.

Eine um vordefinierte Verfahrwege iterativ verfahrbare Fertigungsplattform ermöglicht eine weitestgehend autonome Herstellung von Bauteilen. Insbesondere kann je nach Fertigungsschritt die Fertigungsplattform in eine vorgesehene optimale Position gefahren werden, die den darauffolgenden Fertigungsschritt vorbereitet. So kann beispielsweise für jeden Fertigungsschritt bzw. für jede Fertigungsmaterial-Schicht eine Ablagerungsstellung und eine Umwandlungsstellung vorgesehen sein. Die Ablagerungsstellung kann dabei eine Stellung sein, bei der ein Raum zwischen der jüngsten Fertigungsmaterial-Schicht an der Fertigungsplattform und dem Energieeinbringungsabschnitt gebildet ist, der es erlaubt, dass Fertigungsmaterial in diesen Bereich eintreten kann, um die nächste Schicht zu fertigen. In der Ablagerungsstellung dann dabei der Abstand insbesondere größer sein als die vorgesehene Dicke der nächsten Schicht. Als besonders vorteilhaft hat sich für den Fertigungsmaterialfluss herausgestellt, dass der Abstand in der Ablagerungsstellung die doppelte Dicke der nächsten Schicht beträgt. Wenn die Fertigungsplattform die Ablagerungsstellung eingenommen hat, kann die Abschlussplatte das Fertigungsmaterial in Richtung der Hauptachse und somit in Richtung zu dem Fertigungsraum drücken. Durch die Bewegung von beispielsweise des Wandabschnitt der Fertigungskammer kann das Fertigungsmaterial an die gewünschte Position gerüttelt werden.

In der Umwandlungsstellung wird eine bereits abgelagerte Fertigungsmaterial-Schicht komprimiert, so dass der Abstand der Fertigungsmaterial-Schicht zum Energieeinbringungsabschnitt null beträgt. Dadurch kann eine hohe Dichte des Endprodukts erreicht werden, das das umzuwandelnde Material durch den Druck vor dem Schmelzen bzw. Sintern verdichtet wird.

Beispielsweise kann eine i-te Fertigungsmaterial-Schicht eine Dicke $d_i$ aufweisen und ein zwischen der Fertigungsplattform und dem Energieeinbringungsabschnitt der Fertigungskammer gebildeter Abstand in einer (i+1)-ten Ablagerungsstellung einen Wert $a_{i+1}$ aufweisen, wobei gilt: $a_{i+1} > \sum_{k=1}^{i} d_k + d_{i+1}$, vorzugsweise $a_{i+1} = \sum_{k=1}^{i} d_k + 2d_{i+1}$.

Durch Verfahren der Fertigungsplattform kann die Größe (Ausdehnung des Fertigungsraums entlang der Hauptachse) des Fertigungsraums verändert werden. Der Abstand zwischen der Fertigungsplattform und dem Energieeinbringungsabschnitt ist vorzugsweise die Ausdehnung des Fertigungsraums entlang der Hauptachse der Fertigungskammer.

Es kann ferner vorgesehen sein, dass mittels der Energiequelle Fertigungsmaterial in der Fertigungskammer selektiv aktivierbar ist.

Eine selektive Aktivierung, d. h. ein selektives Schmelzen oder Sintern, von Fertigungsmaterial kann beispielsweise durch eine Steuerung der Wirkrichtung der Umwandlungsenergie oder durch eine Bewegung der Energiequelle erreicht werden. Dadurch wird es in vorteilhafter Weise möglich, eine abgelagerte Fertigungsmaterial-Schicht gezielt und gleichmäßig zu aktivieren und anschließend eine gleichmäßige Verfestigung zu ermöglichen und überschüssiges Fertigungsmaterial außen vor zu lassen.

Ferner kann vorgesehen sein, dass die Fertigungskammer rotationssymmetrisch, vorzugsweise kreiszylindrisch, ist.

Eine rotationssymmetrische, insbesondere kreiszylindrische Fertigungskammer ermöglich eine besonders einfache Handhabung durch die Antriebsvorrichtung, insbesondere bei der Ausführung rotatorischer Bewegungen um die Langsachse der Fertigungskammer. Ferner wird durch eine kreiszylindrische Form effektiv gegen ein Festsetzen von Fertigungsmaterial in etwaigen Ecken vorgebeugt.

Besonders bevorzugt ist vorgesehen, dass die Zuführvorrichtung eine Zuführeinrichtung aufweist, die als Schneckenfördersystem ausgebildet sein kann. Insbesondere kann das Schneckenfördersystem eine Förderschnecke zum Transport von Fertigungsmaterial umfassen.

Durch ein Schneckenfördersystem ist es in vorteilhafter Weise möglich, Fertigungsmaterial dosiert in den Fertigungsraum der Fertigungskammer einzubringen. Gleichzeitig wird durch die Scherbewegung des Schneckenfördersystems einem Verklumpen des Fertigungsmaterials entgegengewirkt, bzw. werden Fertigungsmaterial-Klumpen gelöst. An dem Schneckenfördersystem, insbesondere im Bereich des Eintritts von Fertigungsmaterial, können optional Scheren angeordnet sein, die insbesondere als rotierende Klingen ausgebildet sein können, um die Effektivität der Vorbeugung von Verklumpungen des Fertigungsmaterials zu erhöhen. Alternativ oder zusätzlich kann die Drehrichtung des Schneckenfördersystems regelmäßig geändert werden, was die Effektivität der Vorbeugung von Verklumpungen von Fertigungsmaterial zusätzlich erhöht. Ferner kann je nach Konfiguration der Zuführvorrichtung auch Fertigungsmaterial mit einer geringeren Fließfähigkeit eingesetzt werden, da die Zuführvorrichtung, beispielsweise durch die in das Fertigungsmaterial eingebrachten Scherkräfte, die Fließfähigkeit des Fertigungsmaterials während der Zuführung aktiv erhöht. Somit kann grundsätzlich auch recyceltes Fertigungsmaterial oder Fertigungsmaterial aus einer früheren Charge bzw. Fertigungsmaterial, welches von einem vorangegangenen Fertigungsprozess übriggeblieben ist, verwendet werden.

Vorzugsweise umfasst die Fertigungskammer einen Zylinderkörper, wobei zwischen der Wandung der Fertigungskammer und dem Zylinderkörper ein Zwischenraum gebildet ist, wobei an der Wandung der Fertigungskammer die Zuführeinrichtung für das Fertigungsmaterial angeordnet ist.

Der Zwischenraum kann insbesondere als ringförmiger Zwischenraum ausgebildet sein. Besonders bevorzugt, ist der Zylinderkörper relativ zur Wandung der Fertigungskammer, insbesondere rotatorisch um die Hauptachse der Fertigungskammer bzw. die Mittellängsachse des Zylinderkörpers, bewegbar.

Durch das Anordnen der Zuführeinrichtung an der Wandung der Fertigungskammer, kann die Zuführvorrichtung sich in den Zwischenraum erstrecken und besonders platzsparend verbaut werden.

Ferner kann vorgesehen sein, dass die Fertigungsplattform an einem Ende des Zylinderkörpers angeordnet ist, wobei der Zylinderkörper unabhängig von der Fertigungsplattform rotatorisch um eine Längsmittelachse des Zylinderkörpers bewegbar ist.

Dem Zylinderkörper können in dieser Ausführungsform zwei Funktionen zukommen: Erstens, wird verhindert, dass Fertigungsmaterial sich von oben auf der Fertigungsplattform ablagert. Zweitens, können durch eine Rotation des Zylinderkörpers relativ zur Wandung der Fertigungskammer zusätzliche Scherkräfte in das Fertigungsmaterial eingebracht werden, die vorteilhaft für die Eigenschaften des Fertigungsmaterials sind und bei der Überwindung von Reibung zwischen Fertigungsmaterial-Partikeln unterstützen können.

Vorzugsweise ist vorgesehen, dass über Zylinderkörper und/oder die Zuführeinrichtung eine Prüfung des Fertigungsmaterials erfolgt. Dazu wird das vom Zylinderkörper und/oder der Zuführeinrichtung in das Fertigungsmaterial eingebrachte Drehmoment zum Hervorrufen von Scherkräften ermittelt, beispielsweise über den Stromverbrauch von Antriebseinheiten des Zylinderkörpers bzw. der Zuführeinrichtung. Daraus kann die Fließfähigkeit des Fertigungsmaterials ermittelt werden.

Beispielsweise kann die Abschlussplatte auch rotatorisch um die Hauptachse angetrieben sein, worüber ebenfalls Scherkräfte in das Fertigungsmaterial eingebracht werden können. Das von der Abschlussplatte in das Fertigungsmaterial eingebrachte Drehmoment kann ebenfalls ermittelt, beispielsweise über den Stromverbrauch einer Antriebseinheit der Abschlussplatte.

Diese Information kann ebenfalls zur Ermittlung der Fließfähigkeit des Fertigungsmaterials herangezogen werden.

Der Zylinderkörper, die Zuführeinrichtung und die Abschlussplatte können jeweils Klingen aufweisen, um verbessert Scherkräfte in das Fertigungsmaterial einzubringen.

Die ermittelte Fließfähigkeit des Fertigungsmaterials kann zur Steuerung der mindestens einen Antriebsvorrichtung, mit der der Teil der Fertigungskammer oder die Fertigungskammer bezüglich mindestens eines Freiheitsgrads bewegbar ist, und/oder zur Steuerung der Rotation des Zylinderkörper und/oder zur Steuerung der Zuführeinrichtung und/oder zur Steuerung der Bewegung der Abschlussplatte verwendet werden.

Grundsätzlich kann die Fließfähigkeit des Fertigungsmaterials auch auf eine andere Weise ermittelt werden, beispielsweise über eine externe Vorrichtung. Ferner kann der Zylinderkörper als Hohlzylinder ausgebildet sein. Die Ausführung des Zylinderkörpers als Hohlzylinder ermöglicht die Realisierung der Fertigungsmaschine mit geringem Gewicht.

Besonders bevorzugt, erstreckt sich durch den Hohlzylinder ein Stab, der mit der Fertigungsplattform verbunden ist, um die Fertigungskammer entlang dessen Hauptachse zu bewegen. Der Zylinderkörper kann dabei mitbewegt werden. Dadurch kann die Bewegung der Fertigungsplattform zur Freigabe des Fertigungsraums für die Fertigung eines vorgesehenen Bauteils auf besonders einfache Weise realisiert werden.

Der Zwischenraum kann mit Fertigungsmaterial gefüllt sein, vorzugsweise vollständig gefüllt. Der Zwischenraum erfüllt dabei die Funktion eines Fertigungsmaterial-Lagerraums, d. h. einer Einrichtung, die Fertigungsmaterial vorhält und bei Bedarf bereitstellt.

Besonders bevorzugt weist die Fertigungsmaschine Überwachungseinrichtung auf, die anhand mindestens einer Kennzahl mindestens einer Antriebseinheit, wie zuvor beschrieben, die Fließfähigkeit des Fertigungsmaterials ermittelt.

Es kann ferner vorgesehen sein, dass anhand der beispielsweise durch die Überwachungseinrichtung ermittelten Fließfähigkeit des Fertigungsmaterials Fertigungsparameter der Fertigungsmaschine automatisch anpassbar sind, wenn sich die ermittelte Fließfähigkeit des Fertigungsmaterials verändert.

Die ermittelte Fließfähigkeit des Fertigungsmaterials kann insbesondere zur Abschätzung der Zeitdauer für die Ausbildung einer gewünschten Fertigungsmaterialschicht verwendet werden.

Durch eine derartige Überwachungseinrichtung ist bereits vor der Ablagerung von Fertigungsmaterial eine Echtzeitüberwachung der Eigenschaften des Fertigungsmaterials möglich. So kann auf Veränderungen von physikalischen Eigenschaften des Fertigungsmaterials reagiert werden, bevor eine fehlerhafte oder inhomogene Fertigungsmaterial-Schicht abgelagert und/oder aktiviert wird. Somit kann in vorteilhafter Weise vermieden werden, dass fertige fehlerhafte Bauteile entsorgt werden müssen. Die Ressourceneffizienz wird dadurch in vorteilhafter Weise erhöht, wobei gleichzeitig -beim Einsatz im Weltraum - die Entstehung von Weltraumschrott vermieden wird. Durch eine automatische Anpassung von Fertigungsparametern wird ferner eine weitestgehend autarke Fertigung ermöglicht, ohne dass ein Benutzer aktiv in den Fertigungsprozess eingreifen muss. Ferner wird die Effizienz der Fertigungsmaschine, insbesondere im Hinblick auf die erforderliche Energie und Zeit bei der Fertigung, erhöht.

Vorzugsweise weist die Fertigungsmaschine mindestens eine Abtastvorrichtung zur Überwachung einer abgelagerten Fertigungsmaterialschicht auf. Dadurch kann die bei einem Fertigungsprozess eines Bauteils die Qualität des Fertigungsprozesses und/oder des Bauteils überwacht werden, wobei die Homogenität der abgeschiedenen Fertigungsmaterialschicht ermittelt bzw. überwacht wird.

Vorzugsweise ist die mindestens eine Abtastvorrichtung eine optische Abtastvorrichtung, wobei die Überwachung der Qualität durch die optische Abtastvorrichtung durch optisches Abtasten, vorzugsweise während einer Ablagerung von Fertigungsmaterial an der Fertigungsplattform und/oder während einer Aktivierung des Fertigungsmaterials, erfolgt. Vorzugsweise ist ein Fenster vorgesehen, durch das die optische Abtastung erfolgen kann. Die die optische Abtastung kann auch durch den Energieeinbringungsabschnitt erfolgen, d.h. der Energieeinbringungsabschnitt wird zusätzlich als Fenster für die optische Abtastung genutzt, wobei dieser transmissiv ausgebildet ist, um eine optische Abtastung zu ermöglichen. Die optische Abtastung kann durch elektromagnetische Wellen im für das menschliche Auge sichtbaren Bereich erfolgen, wobei das Fenster eine hinreichende Transmissivität für sichtbare elektromagnetische Wellen aufweist bzw. durchlässig für elektromagnetische Wellen im sichtbaren Bereich ist. Die optische Abtastvorrichtung kann beispielsweise eine Kamera sein.

Besonders bevorzugt ist vorgesehen, dass anhand von durch die mindestens eine Abtastvorrichtung ermittelten Informationen über die abgelagerte Fertigungsmaterialschicht Fertigungsparameter der Fertigungsmaschine automatisch anpassbar sind. wenn die ermittelte Qualität beispielsweise außerhalb eines vorgegebenen Toleranzbereichs liegt.

Das Vorsehen einer Abtastvorrichtung ermöglicht eine Überwachung, insbesondere auch in Echtzeit von abgelagerten Fertigungsmaterial-Schichten, insbesondere hinsichtlich der Homogenität der jeweiligen Schicht. Somit kann, wenn nach der Ablagerung und Homogenisierung (durch Bewegung der Fertigungskammer) festgestellt wird, dass die Fertigungsmaterial-Schicht nicht hinreichend homogen ist, eine weitere Bewegung der Fertigungskammer mittels der Antriebsvorrichtung ausgelöst werden, um einen gewünschten Grad an Homogenität zu erreichen, bevor eine Aktivierung erfolgt. Eine optische Abtastung ist eine einfach zu realisierende Möglichkeit, die Echtzeitüberwachung zu verwirklichen. Durch eine automatische Anpassung von Fertigungsparametern wird ferner eine weitestgehend autarke Fertigung ermöglicht, ohne dass ein Benutzer aktiv in den Fertigungsprozess eingreifen muss. Ferner wird die Effizienz der Fertigungsmaschine, insbesondere im Hinblick auf die erforderliche Energie und Zeit bei der Fertigung, erhöht.

Ferner kann die Fertigungsmaschine mindestens eine Kühlvorrichtung zum Kühlen und Verfestigen von abgeschiedenem und aktiviertem Fertigungsmaterial aufweisen.

Durch das Vorsehen einer Kühlvorrichtung kann das Abkühlen einer Fertigungsmaterial-Schicht nach dem Aktivieren beschleunigt werden. Somit kann die Dauer der Fertigung einer Fertigungsmaterial-Schicht verkürzt werden. Beispielsweise kann die Kühlvorrichtung wahlweise durch einen Benutzbar aktivierbar und deaktivierbar ausgebildet sein, um situationsbedingt festzulegen, ob eine verkürzte Fertigungszeit gewünscht ist.

Das erfindungsgemäße additive Fertigungsverfahren umfasst die Schritte:

a) Verfahren einer in einer geschlossenen und vorzugsweise starren Fertigungskammer angeordneten und verfahrbaren Fertigungsplattform in eine Ablagerungsstellung, wobei zwischen der Fertigungsplattform und einer Wandung der Fertigungskammer ein Fertigungsraum für eine Fertigungsmaterial-Schicht gebildet wird,

b) Einleiten von Fertigungsmaterial für die Fertigungsmaterial-Schicht in den Fertigungsraum durch eine Zuführvorrichtung,

c) Ablagern des Fertigungsmaterials an der Fertigungsplattform, wobei die Fertigungsplattform den Fertigungsraum zumindest teilweise begrenzt,

d) Homogenisieren des an der Fertigungsplattform abgelagerten Fertigungsmaterials durch Bewegen eines Teils der Fertigungskammer oder der Fertigungskammer, wobei die Fertigungsmaterial-Schicht ausgebildet wird,

e) Aktivieren der Fertigungsmaterial-Schicht durch Einleiten von Umwandlungsenergie in den Fertigungsraum, wobei die Umwandlungsenergie durch einen Energieeinbringungsabschnitt der Fertigungskammer von außerhalb der Fertigungskammer in den Fertigungsraum der Fertigungskammer eingebracht wird,

f) Wiederholen der Schritte a) bis e) für weitere Fertigungsmaterial-Schichten, wobei das Ablagern des Fertigungsmaterials in Schritt c) an der Fertigungsplattform und/oder an einer zuvor gefertigten Fertigungsmaterial-Schicht bzw. an zuvor gefertigte Fertigungsmaterial-Schichten erfolgt, bis eine vordefinierte Abbruchbedingung erfüllt ist, vorzugsweise bis zur Fertigstellung einer vordefinierten Anzahl von Fertigungsmaterial-Schichten oder bis zur Fertigstellung eines Bauteils.

Mit anderen Worten:

a) Verfahren einer in einer geschlossenen und vorzugsweise starren Fertigungskammer angeordneten und verfahrbaren Fertigungsplattform in eine i-te Ablagerungsstellung, wobei zwischen der Fertigungsplattform und einer Wandung der Fertigungskammer ein Fertigungsraum für eine i-te Fertigungsmaterial-Schicht gebildet wird,

b) Einleiten von Fertigungsmaterial für die i-te Fertigungsmaterial-Schicht, $i \in \mathbb{N}$, in den Fertigungsraum durch eine Zuführvorrichtung,

c) Ablagern des Fertigungsmaterials an der Fertigungsplattform, wobei die Fertigungsplattform den Fertigungsraum zumindest teilweise begrenzt,

d) Homogenisieren des an der Fertigungsplattform abgelagerten Fertigungsmaterials durch Bewegen eines Teils der Fertigungskammer oder der Fertigungskammer, wobei die i-te Fertigungsmaterial-Schicht ausgebildet wird,

e) Aktivieren der i-ten Fertigungsmaterial-Schicht durch Einleiten von Umwandlungsenergie in den Fertigungsraum, wobei die Umwandlungsenergie durch einen Energieeinbringungsabschnitt der Fertigungskammer von außerhalb der Fertigungskammer in den Fertigungsraum der Fertigungskammer eingebracht wird,

f) Wiederholen der Schritte a) bis e) für (i+1)-te Fertigungsmaterial-Schichten, wobei das Ablagern des Fertigungsmaterials in Schritt c) an der Fertigungsplattform und/oder an einer zuvor gefertigten Fertigungsmaterial-Schicht bzw. an zuvor gefertigte Fertigungsmaterial-Schichten erfolgt, bis eine vordefinierte Abbruchbedingung erfüllt ist, vorzugsweise bis zur Fertigstellung einer vordefinierten Anzahl von Fertigungsmaterial-Schichten oder bis zur Fertigstellung eines Bauteils.

Die Fertigungsplattform kann alternativ oder zusätzlich ausgebildet sein, um das Fertigungsmaterial zu formen. Die Größe des Fertigungsraumes ist vorzugsweise durch Verfahren der Fertigungsplattform veränderbar, wobei der Fertigungsraum insbesondere zwischen der Fertigungsplattform und dem Energieeinbringungsabschnitt der Fertigungskammer gebildet ist. Mit anderen Worten, ist vorzugsweise zwischen der Fertigungsplattform und dem Energieeinbringungsabschnitt der Fertigungskammer ein Abstand gebildet, der die Größe des Fertigungsraumes festlegt.

Die Umwandlungsenergie kann insbesondere in Form von elektromagnetischer Strahlung in einem vorgegebenem Wellenlängenbereich zur Verfügung gestellt werden, beispielsweise durch einen Laser als Energiequelle, und von außerhalb der Fertigungskammer in das Innere der Fertigungskammer bzw. in den Fertigungsraum eingeleitet werden, um das Fertigungsmaterial beispielsweise zu sintern oder zu schmelzen, wobei sich das Fertigungsmaterial anschließend durch Abkühlen verfestigt. Der Energieeinbringungsabschnitt ist insbesondere transmissiv für die elektromagnetische Strahlung in dem vorgegebenen Wellenlängenbereich. Vorzugsweise beträgt der Transmissionsgrad des Energieeinbringungsabschnitts für die elektromagnetische Strahlung im vorgegebenen Wellenlängenbereich mindestens 80 %. Alternativ oder zusätzlich kann Umwandlungsenergie in Form von Wärme eingesetzt werden, wobei in diesem Fall der Energieeinbringungsabschnitt wärmeleitfähig ist, um eine Erwärmung von an der Fertigungsplattform abgelagertem Fertigungsmaterial zu ermöglichen.

Durch das Vorsehen einer geschlossenen Fertigungskammer wird vermieden, dass ein Benutzer mit möglicherweise gesundheitsgefährdenden Nebenprodukten des Fertigungsverfahrens oder gefährlichen Teilen der Fertigungsmaschine in Kontakt kommt. Ferner wird eine Kontamination der Umwelt in vorteilhafter Weise vermieden. Bei dem Einsatz in Umgebungen mit geringer oder fehlender Schwerkraft wird durch das vorsehen einer geschlossenen Fertigungskammer ferner der Raum begrenzt, in dem Fertigungsmaterial davonschweben kann. Ferner wird eine Kontamination des Fertigungsmaterials vermieden.

Die Fertigungsplattform erlaubt es in vorteilhafter Weise, die Ablagerung von Fertigungsmaterial zu steuern. Gleichzeitig stellt die Fertigungsplattform eine Basis dar, an der das Bauteil fertigbar ist. Das Homogenisieren einer abgelagerten Fertigungsmaterial-Schicht durch Bewegen eines Teils der Fertigungskammer oder der Fertigungskammer ermöglicht, beispielsweise mittels Vibrieren oder Rütteln, dass das Fertigungsmaterial in einen gewünschten Bereich im Fertigungsraum gelangt. Der gewünschte Bereich für das Fertigungsmaterial kann insbesondere der Bereich zwischen dem Energieeinbringungsabschnitt und der Fertigungsplattform sein. Ferner kann das Fertigungsmaterial beispielsweise durch Vibrieren oder Rütteln, homogen im gewünschten Bereich verteilt werden. Dadurch kann eine homogene Fertigungsmaterial-Schicht an der Fertigungsplattform ausgebildet werden, die anschließend durch Einbringung der Umwandlungsenergie aktiviert werden kann. Dies gewährleistet eine hohe Qualität eines mittels dieses Verfahrens gefertigten Bauteils. Ferner ist kein Gasstrom oder Ähnliches erforderlich, um eine homogene Ablagerung von Fertigungsmaterial zu realisieren, so dass der vorrichtungstechnische Aufwand reduziert ist. Die Bewegung der Fertigungskammer kann insbesondere an vorherrschende Umgebungsbedingungen, beispielsweise an die Schwerkraft, oder an die Eigenschaften des Fertigungsmaterials angepasst werden. Somit ist es möglich, das erfindungsgemäße Fertigungsverfahren auch in Umgebungen mit geringer oder fehlender Schwerkraft einzusetzen, ohne die Qualität eines zu fertigenden Bauteils zu beeinträchtigen. Das erfindungsgemäße Fertigungsverfahren ist somit vielfältig und flexibel einsetzbar.

Der Teil der Fertigungskammer, der bewegt wird, kann beispielsweise ein den Fertigungsraum begrenzender Wandabschnitt der Fertigungskammer sein. Der Wandabschnitt kann beispielsweise den Boden der Fertigungskammer sein. Der Wandabschnitt kann auch den Energieeinbringungsabschnitt aufweisen.

Vorzugsweise ist vorgesehen, dass der Abstand zwischen dem Energieeinbringungsabschnitt und der Fertigungsplattform in einer jeweiligen Ablagerungsstellung, die für eine Fertigungsmaterial-Schicht vorgesehen ist, an eine vordefinierte Dicke der jeweiligen Fertigungsmaterial-Schicht und Dicken von zuvor gefertigten Fertigungsmaterial-Schichten angepasst ist und vorzugsweise größer ist, als die Summe der vordefinierten Dicke der jeweiligen Fertigungsmaterial-Schicht und der Dicken von zuvor gefertigten Fertigungsmaterial-Schichten.

Insbesondere kann vorgesehen sein, dass eine i-te Fertigungsmaterial-Schicht eine Dicke di aufweist und ein zwischen der Fertigungsplattform und dem Energieeinbringungsabschnitt der Fertigungskammer gebildeter Abstand in einer (i+1)-ten Ablagerungsstellung einen Wert $a_i+1$ aufweist, wobei gilt: $a_{i+1} >$

$$\sum_{k=1}^{i} d_k + d_{i+1}$$, vorzugsweise

$$a_{i+1} = \sum_{k=1}^{i} d_k + 2d_{i+1}.$$

Der Energieeinbringungsabschnitt und die Fertigungsplattform begrenzen dabei den Fertigungsraum zumindest teilweise, wobei die Ausdehnung des Fertigungsraums in eine Ausdehnungsrichtung des Fertigungsraums durch den Abstand zwischen dem Energieeinbringungsabschnitt und der Fertigungsplattform definiert ist, wobei der Abstand durch Verfahren der Fertigungsplattform veränderbar ist.

Das Verfahren kann ferner ein Komprimieren der ersten Fertigungsmaterial-Schicht nach Schritt d) aufweisen, wobei die Fertigungsplattform in eine erste Umwandlungsstellung verfahren wird.

Mit anderen Worten kann das Verfahren ein Komprimieren der i-ten Fertigungsmaterial-Schicht nach Schritt d) umfassen, wobei die Fertigungsplattform in eine i-te Umwandlungsstellung verfahren wird.

Durch ein Verfahren der Fertigungsplattform in vordefinierte Stellungen, insbesondere für jeden Fertigungsschritt iterativ, ermöglicht eine weitestgehend autonome Herstellung von Bauteilen. Die Fertigungsplattform kann je nach Verfahrensschritt in eine vorgesehene optimale Position gefahren werden, die den darauffolgenden Fertigungsschritt vorbereitet. So kann beispielsweise für jeden Fertigungsschritt bzw. für jede Fertigungsmaterial-Schicht neben der Ablagerungsstellung zusätzlich eine Umwandlungsstellung vorgesehen sein, bei dem eine Fertigungsmaterial-Schicht zur Vorbereitung der Aktivierung komprimiert wird. Dadurch kann eine hohe Dichte des Endprodukts erreicht werden, das das umzuwandelnde Material durch den Druck vor dem Schmelzen bzw. Sintern verdichtet wird.

Die Ablagerungsstellung kann eine Stellung sein, bei der ein Raum zwischen der jüngsten Fertigungsmaterial-Schicht an der Fertigungskammer und dem Energieeinbringungsabschnitt gebildet ist, der es erlaubt, dass Fertigungsmaterial in diesen Bereich eintreten kann, um die nächste Schicht zu fertigen. In der Ablagerungsstellung dann dabei der Abstand insbesondere größer sein als die vorgesehene Dicke der nächsten Schicht. Als besonders vorteilhaft hat sich für den Fertigungsmaterialfluss herausgestellt, dass der Abstand in der Ablagerungsstellung die doppelte Dicke der nächsten Schicht beträgt. In der Umwandlungsstellung wird eine bereits abgelagerte Fertigungsmaterial-Schicht komprimiert, so dass der Abstand der Fertigungsmaterial-Schicht zum Energieeinbringungsabschnitt null beträgt.

Nach dem Verfahren der Fertigungsplattform in die Ablagerungsstellung kann das Fertigungsmaterial auch in Richtung der Fertigungskammer gedrückt werden. Die kann beispielsweise durch eine Zuführvorrichtung erfolgen. Die Zuführvorrichtung kann dazu beispielsweise eine Abdeckplatte aufweisen, die die Fertigungskammer abdeckt und die beweglich ist.

Zusätzlich oder alternativ kann die Zuführvorrichtung eine Zuführeinrichtung, beispielsweise ein Schneckenfördersystem, umfassen, dass das Einleiten des Fertigungsmaterials in den Fertigungsraum unterstützt. Insbesondere kann das Schneckenfördersystem eine Förderschnecke zum Transport von Fertigungsmaterial umfassen.

Durch die Scherbewegung des Schneckenfördersystems einem Verklumpen des Fertigungsmaterials entgegengewirkt, bzw. werden Fertigungsmaterial-Klumpen gelöst. An dem Schneckenfördersystem, insbesondere im Bereich des Eintritts von Fertigungsmaterial, können optional Scheren angeordnet sein, die insbesondere als rotierende Klingen ausgebildet sein können, um die Effektivität der Vorbeugung von Verklumpungen des Fertigungsmaterials zu erhöhen. Alternativ oder zusätzlich kann die Drehrichtung des Schneckenfördersystems regelmäßig geändert werden, was die Effektivität der Vorbeugung von Verklumpungen von Fertigungsmaterial zusätzlich erhöht. Ferner kann je nach Konfiguration der Zuführvorrichtung auch Fertigungsmaterial mit einer geringeren Fließfähigkeit eingesetzt werden, da die Zuführvorrichtung, beispielsweise durch die in das Fertigungsmaterial eingebrachten Scherkräfte, die Fließfähigkeit des Fertigungsmaterials während der Zuführung aktiv erhöht. Somit kann grundsätzlich auch recyceltes Fertigungsmaterial oder Fertigungsmaterial aus einer früheren Charge bzw. Fertigungsmaterial, welches von einem vorangegangenen Fertigungsprozess übriggeblieben ist, verwendet werden.

Zusätzlich oder alternativ zu dem Einbringen von Scherkräften mittels der Zuführeinrichtung können auch anderweitig Scherkräfte in das Fertigungsmaterial eingebracht werden. Beispielswiese kann die Fertigungskammer durch einen rotierenden Zylinderkörper begrenzt sein, über den, vorzugsweise mittels Klingen, Scherkräfte eingebracht werden.

Auch kann die Fertigungskammer mittels einer Abdeckplatte begrenzt sein, die rotatorisch antreibbar ist und, vorzugsweise mittels Klingen, Scherkräfte in das Fertigungsmaterial einbringen kann. Über die Abdeckplatte kann das Fertigungsmaterial auch in Richtung der Fertigungskammer gedrückt werden.

Vorzugsweise ist vorgesehen, dass die Homogenisierung des Fertigungsmaterials ein Vibrieren eines Teils der Fertigungskammer oder der Fertigungskammer umfasst.

Vibrationen haben sich zur Ausbildung homogener Fertigungsmaterial-Schichten als besonders vorteilhaft erwiesen. Somit kann, insbesondere durch Vibrationen orthogonal zur Hauptachse der Fertigungskammer, eine besonders hohe Homogenität der Fertigungsmaterial-Schichten erreicht werden.

Es kann ferner vorgesehen sein, dass das Aktivieren des Fertigungsmaterials in Schritt e) durch selektives Einbringen von Umwandlungsenergie selektiv erfolgt. Somit kann während des Schmelzens oder des Sinterns gezielt Energie in vorgesehene Bereiche eingebracht werden insbesondere um eine vordefinierte Geometrie eines Bauteils zu realisieren. Mit anderen Worten: Die selektive Einbringung der Umwandlungsenergie erlaubt es, durch ein gezieltes Sintern bzw. Schmelzen von Fertigungsmaterial, komplexe Bauteilformen zu realisieren. Eine selektive Aktivierung von Fertigungsmaterial kann beispielsweise durch eine Steuerung der Wirkrichtung der Umwandlungsenergie oder durch eine Bewegung der Energiequelle erreicht werden. Dadurch wird es in vorteilhafter Weise möglich, eine abgelagerte Fertigungsmaterial-Schicht gezielt und gleichmäßig zu aktivieren und überschüssiges Fertigungsmaterial außen vor zu lassen.

Besonders bevorzugt ist vorgesehen, dass während dem Einleiten von Fertigungsmaterial in Schritt b) anhand beispielsweise mindestens einer Kennzahl mindestens einer Antriebseinheit, vorzugsweise anhand des Stromverbrauchs beim Einleiten des Fertigungsmaterials oder beim Einbringen von Scherkräften, die Fließfähigkeit des Fertigungsmaterials ermittelt wird.

Ferner kann vorgesehen sein, dass Fertigungsparameter des Verfahrens automatisch anpasst werden, wenn sich die ermittelte Fließfähigkeit des Fertigungsmaterials verändert.

Durch eine derartige Überwachung ist bereits vor der Ablagerung von Fertigungsmaterial eine Echtzeitüberwachung der Eigenschaften des Fertigungsmaterials möglich. So kann auf Veränderungen von physikalischen Eigenschaften des Fertigungsmaterials reagiert werden, bevor eine fehlerhafte oder inhomogene Fertigungsmaterial-Schicht abgelagert und/oder verfestigt wird. Somit kann in vorteilhafter Weise vermieden werden, dass fertige fehlerhafte Bauteile entsorgt werden müssen. Die Ressourceneffizienz wird dadurch in vorteilhafter Weise erhöht, wobei gleichzeitig -beim Einsatz im Weltraum - die Entstehung von Weltraumschrott vermieden wird. Durch eine automatische Anpassung von Fertigungsparametern wird ferner eine weitestgehend autarke Fertigung ermöglicht, ohne dass ein Benutzer aktiv in den Fertigungsprozess eingreifen muss. Ferner wird die Effizienz der Fertigungsmaschine, insbesondere im Hinblick auf die erforderliche Energie und Zeit bei der Fertigung, erhöht.

Die Kennzahl kann insbesondere anhand der vom Zylinderkörper und/oder der Zuführeinrichtung und/oder der Abdeckplatte in das Fertigungsmaterial eingebrachten Drehmomente zum Hervorrufen von Scherkräften ermittelt werden, beispielsweise über den Stromverbrauch von Antriebseinheiten. Daraus kann die Fließfähigkeit des Fertigungsmaterials ermittelt werden.

Die ermittelte Fließfähigkeit des Fertigungsmaterials kann zur Steuerung der mindestens einen Antriebsvorrichtung, mit der der Teil der Fertigungskammer oder die Fertigungskammer bezüglich mindestens eines Freiheitsgrads bewegbar ist, und/oder zur Steuerung der Rotation des Zylinderkörper und/oder zur Steuerung der Zuführeinrichtung und/oder zur Steuerung der Bewegung der Abschlussplatte verwendet werden. Insbesondere kann über die ermittelte Fließfähigkeit bestimmt werden, wie lange die Ausbildung einer gewünschten Fertigungsmaterialschicht benötigt.

Vorzugsweise ist vorgesehen, dass während des Verfahrens die jeweilige Fertigungsmaterial-Schicht, vorzugsweise durch optisches Abtasten, überwacht wird. Dabei kann die Homogenität Fertigungsmaterial-Schicht überwacht werden.

Ferner kann vorgesehen sein, dass Fertigungsparameter des Verfahrens automatisch angepasst werden, wenn die ermittelte Homogenität außerhalb eines vorgegebenen Toleranzbereichs liegt.

Das Vorsehen einer Abtastung ermöglicht eine Echtzeitüberwachung von abgelagerten Fertigungsmaterial-Schichten, insbesondere hinsichtlich der Homogenität der jeweiligen Schicht. So kann, wenn nach der Ablagerung und Homogenisierung (durch Bewegung der Fertigungskammer) festgestellt wird, dass die Fertigungsmaterial-Schicht nicht hinreichend homogen ist, eine weitere Bewegung der Fertigungskammer mittels der Antriebsvorrichtung ausgelöst werden, um einen gewünschten Grad an Homogenität zu erreichen, bevor eine Aktivierung erfolgt. Eine optische Abtastung ist eine einfach zu realisierende Möglichkeit, die Echtzeitüberwachung zu verwirklichen. Durch eine automatische Anpassung von Fertigungsparametern wird ferner eine weitestgehend autarke Fertigung ermöglicht, ohne dass ein Benutzer aktiv in den Fertigungsprozess eingreifen muss. Ferner wird die Effizienz der Fertigungsmaschine, insbesondere im Hinblick auf die erforderliche Energie und Zeit bei der Fertigung, erhöht.

Besonders bevorzugt, wird eine Fertigungsmaterial-Schicht nach dem Aktivieren in Schritt e) gekühlt, um das Fertigungsmaterial zu verfestigen.

Durch das Vorsehen einer Kühlung kann das Abkühlen einer Fertigungsmaterial-Schicht nach dem Aktivieren beschleunigt werden. Somit kann die Dauer der Fertigung einer Fertigungsmaterial-Schicht verkürzt werden. Beispielsweise kann die Kühlung wahlweise durch einen Benutzbar aktivierbar und deaktivierbar ausgebildet sein, um situationsbedingt festzulegen, ob eine verkürzte Fertigungszeit gewünscht ist.

Die erfindungsgemäße Vorrichtung und das erfindungsgemäße Verfahren haben den besonderen Vorteil, dass eine Bestimmung der Fließfähigkeit des Fertigungsmaterials und eine Überwachung der Ausbildung der Materialschicht kontinuierlich und in-situ erfolgen kann, worüber eine vorteilhafte Steuerung erfolgen kann, so dass Fertigungsmaterialien unterschiedlicher Fließfähigkeit unter unterschiedlichen Gravitationsbedingungen problemlos verwendet werden können-

Im Folgenden wird eine bevorzugte Ausführungsform der erfindungsgemäßen Fertigungsmaschine unter Bezugnahme auf die nachfolgenden Figuren näher erläutert.

Es zeigen:

Fign. 1 und 2    Prinzipskizzen zur Verdeutlichung des Grundprinzips der vorliegenden Erfindung und

Fig. 3    eine schematische Darstellung des bevorzugten Ausführungsbeispiels der Fertigungsmaschine gemäß der vorliegenden Erfindung.

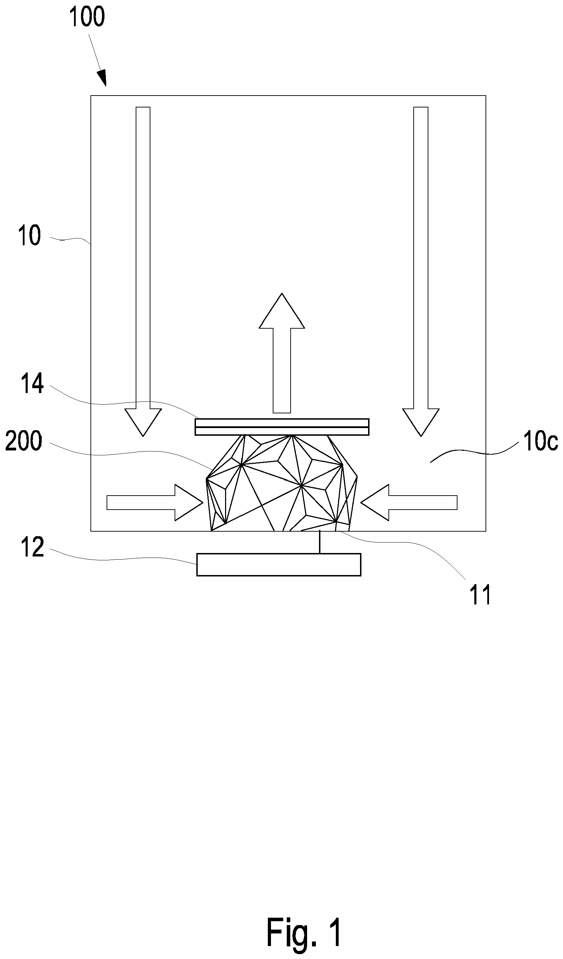

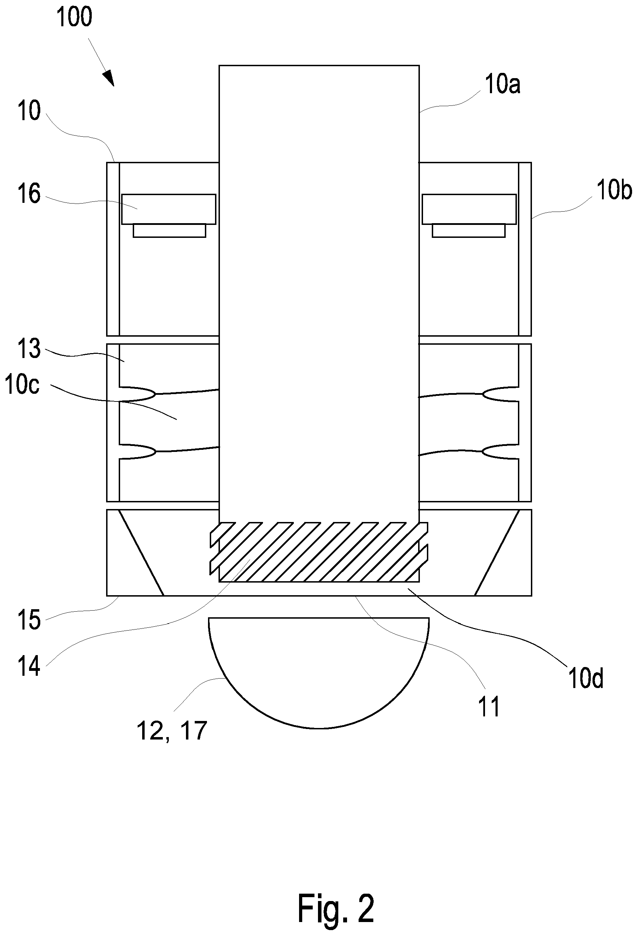

Figuren 1 und 2 sind Prinzipskizzen zur Verdeutlichung des Grundprinzips der vorliegenden Erfindung . Die erfindungsgemäße Fertigungsmaschine 100 gemäß dem bevorzugten Ausführungsbeispiel der vorliegenden Erfindung weist eine Fertigungskammer 10 mit einer in der Fertigungskammer 10 angeordneten Fertigungsplattform 14 auf. Die Fertigungskammer 10 weist an dessen Wandung einen Energieeinbringungsabschnitt 11 auf, durch den Energie einer Energiequelle 12 von außen in einen Fertigungsraum 10d der Fertigungskammer 10 einleitbar ist.

Wie insbesondere in Figur 1 schematisch dargestellt ist, wird das Bauteil 200 im Fertigungsraum 10d der Fertigungskammer 10 zwischen der Fertigungsplattform 14 und dem Energieeinbringungsabschnitt 11 schichtweise gefertigt. Die Ausdehnung bzw. Größe des Fertigungsraums 10d ist durch Verfahren der Fertigungsplattform 14 entlang der Hauptachse der Fertigungskammer 10 veränderbar bzw. an eine zu fertigende Schicht des Bauteils 200 bzw. an das Bauteil 200 anpassbar. Die Schichten werden dabei iterativ gefertigt, wobei die Fertigungsplattform 14 jeweils für jede neue Schicht nach oben bewegt wird, so dass zwischen der Fertigungsplattform 14 und dem Energieeinbringungsabschnitt 11 ein Raum freigegeben wird, in den Fertigungsmaterial für die jeweils nächste Schicht zuführbar ist. Das Fertigungsmaterial wird von oben zugeführt und dann seitlich in den Fertigungsraum 10d transportiert.

Die Fertigungskammer 10 weist, wie schematisch in Figur 2 dargestellt, einen Zylinderkörper 10a auf, wobei zwischen der Wandung 10b der Fertigungskammer 10 und dem Zylinderkörper 10a ein Zwischenraum 10c gebildet ist. In dem Zwischenraum 10c ist eine Zuführeinrichtung 13, die insbesondere ein Schneckenfördersystem sein kann, angeordnet. Der Zwischenraum 10c kann die Funktion eines Fertigungsmaterial-Lagers zukommen, das mit Fertigungsmaterial gefüllt ist, dieses vorhält und bei Bedarf bereitstellt und insbesondere in den Fertigungsraum 10d einleitet. In dem Zwischenraum 10c ist ferner eine Abschlussplatte 16 angeordnet, die den Zwischenraum 10c abdichtet und Verunreinigungen des Fertigungsmaterials oder ein Entweichen von Fertigungsmaterial vermeidet. Ferner drückt die Abschlussplatte 16 das Fertigungsmaterial in Richtung der Zuführeinrichtung 13 bzw. in Richtung des Fertigungsraums 10d, um einen kontinuierlichen Fertigungsmaterialfluss zu gewährleisten. Dazu kann die Abschlussplatte 16 entlang der Hauptachse der Fertigungskammer 10 verfahrbar und/oder um die Hauptachse der Fertigungskammer rotierbar ausgebildet sein.

Der Zylinderkörper 10a kann ebenfalls rotierbar ausgebildet sein, wobei über nicht dargestellte Klingen Scherkräfte in das Fertigungsmaterial eingebracht werden können. Durch die Rotation der Abschlussplatte 16 werden über nicht dargestellte Klingen ebenfalls Scherkräfte in das Fertigungsmaterial eingebracht.

Die mittels des Zylinderkörpers 10a, der Zuführeinrichtung 13 und der Abschlussplatte 16 eingebrachten Scherkräfte kann eine Prüfung des Fertigungsmaterials erfolgen. Dazu werden die vom Zylinderkörper 10a, der Zuführeinrichtung 13 und der Abschlussplatte 16 notwendigen Drehmomente zum Hervorrufen von Scherkräften ermittelt, beispielsweise über den Stromverbrauch von Antriebseinheiten. Daraus kann die Fließfähigkeit des Fertigungsmaterials ermittelt werden.

Die ermittelte Fließfähigkeit des Fertigungsmaterials kann zur Steuerung der Fertigungsmaschine 100 herangezogen werden.

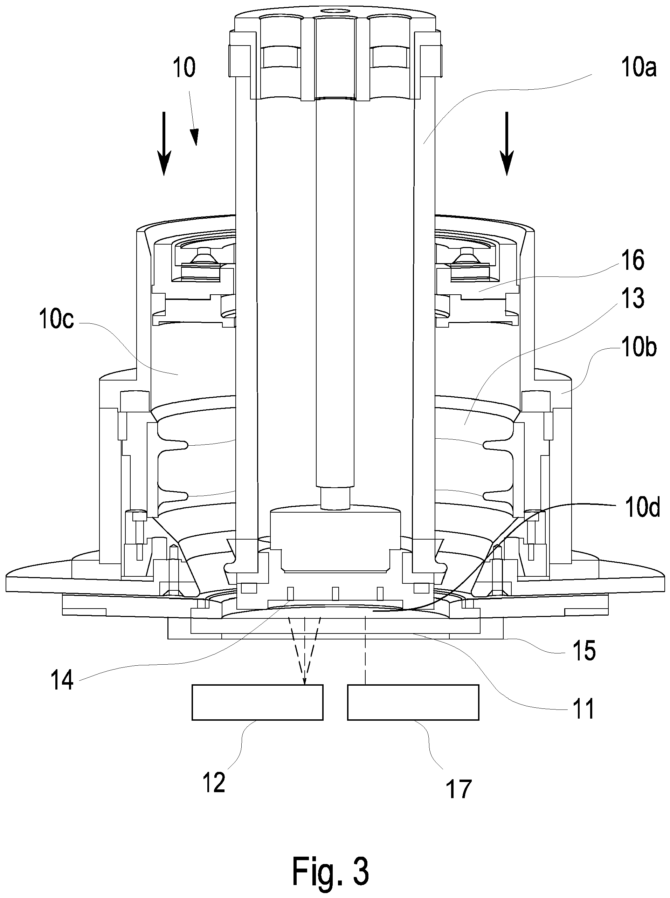

In Figur 3 ist ein bevorzugtes Ausführungsbeispiel einer erfindungsgemäßen Fertigungsmaschine 100 schematisch dargestellt. Die Fertigungsmaschine 100 umfasst eine Fertigungskammer 10, die einen Zylinderkörper 10a umfasst und eine Wandung 10b aufweist. Der Zylinderkörper 10a ist kreiszylindrisch als Hohlzylinder ausgebildet und koaxial zur Wandung 10b der Fertigungskammer angeordnet, so dass ein kreisringförmiger Zwischenraum 10c zwischen dem Zylinderkörper 10a und der Wandung 10b gebildet ist. An der Wandung der Fertigungskammer 10 ist eine Zuführeinrichtung 13 angeordnet, die ein Schneckenfördersystem umfasst. Mittels des Schneckenfördersystems kann Fertigungsmaterial in vorteilhafter Weise der Fertigungskammer 10 zugeführt werden, wobei ein Verklumpen des Fertigungsmaterials vermieden wird. Ferner werden Scherkräfte in das Fertigungsmaterial eingebracht. In dem Zwischenraum 10c ist ferner eine Abschlussplatte 16 angeordnet, die den Zwischenraum 10c abdichtet und Verunreinigungen des Fertigungsmaterials oder ein Entweichen von Fertigungsmaterial vermeidet. An der Abschlussplatte 16 können Scheren angeordnet sein, die den Figuren nicht dargestellt sind. Die rotierenden Scheren können dabei unterstützen, ein Verklumpen von Fertigungsmaterial zu vermeiden bzw. Verklumpungen zu lösen und Scherkräfte in das Fertigungsmaterial einbringen. Ferner drückt die Abschlussplatte 16 das Fertigungsmaterial in Richtung der Zuführeinrichtung 13 bzw. in Richtung des Fertigungsraums 10d, um einen kontinuierlichen Fertigungsmaterialfluss zu gewährleisten. Dazu kann die Abschlussplatte 16 entlang der Hauptachse der Fertigungskammer 10 verfahrbar und/oder um die Hauptachse der Fertigungskammer rotierbar ausgebildet sein.

Die Fertigungskammer 10 weist ferner einen Energieeinbringungsabschnitt 11 auf, durch den Umwandlungsenergie von außerhalb der Fertigungskammer 10 in das Innere der Fertigungskammer 10 eingebracht werden kann. Die Umwandlungsenergie wird durch eine Energiequelle 12 bereitgestellt, die außerhalb der Fertigungskammer 10 an dem Energieeinbringungsabschnitt 11 angeordnet ist.

Die Fertigungsplattform 14 ist nach dem Ausführungsbeispiel der Figur 3 am unteren Bereich des Zylinderkörpers 10a angeordnet und begrenzt den Fertigungsraum 10d. Beim Verfahren der Fertigungsplattform 14 entlang der Hauptachse der Fertigungskammer 10, wird der Zylinderkörper 10a mitbewegt. Wird die Fertigungsplattform 14 nach oben bewegt, wird der Fertigungsraum 10d zwischen der Fertigungsplattform 14 und dem Energieeinbringungsabschnitt 11 vergrößert, um Fertigungsmaterial aufzunehmen. Eine rotatorische Bewegung des Zylinderkörpers 10a kann hingegen unabhängig von der Fertigungsplattform 14, d. h. ohne, dass die Fertigungsplattform 14 rotiert, erfolgen. Eine Rotation des Zylinderkörpers 10a relativ zur Wandung 10b der Fertigungskammer 10 kann beispielsweise den Fertigungsmaterialfluss unterstützen und Scherkräfte in das Fertigungsmaterial einbringen.

Die Fertigungsmaschine 100 weist ferner eine Antriebsvorrichtung auf, der einen die Fertigungskammer 10 begrenzenden Wandabschnitt 15, der der Fertigungsplattform (14) gegenüberliegt, bewegt. Der Wandabschnitt 15, der einen Bodenbereich der Fertigungskammer 10 bildet, ist translatorisch in einer Richtung orthogonal zur Hauptachse bewegbar. Durch eine translatorische Bewegung des Wandabschnitts 15 der Fertigungskammer 10 orthogonal zur Hauptachse kann in vorteilhafter Weise Fertigungsmaterial in einen gewünschten Bereich, insbesondere in einen Fertigungsraum zwischen der Fertigungsplattform 14 und dem Energieeinbringungsabschnitt 11 gebracht werden. Vibrationen haben sich als besonders vorteilhaft herausgestellt, um Fertigungsmaterial in eine gewünschte Richtung zu leiten.

Die Antriebsvorrichtung kann als Vibrationsvorrichtung ausgebildet sein, so dass der Wandabschnitt 15 vibrierend angetrieben wird.

Der Energieeinbringungsabschnitt 11 kann in dem Wandabschnitt 15 angeordnet sein.

Der Antrieb des Wandabschnitts 15 kann anhand der mittels der in das Fertigungsmaterial eingebrachten Scherkräfte bestimmten Fließfähigkeit des Fertigungsmaterials, was in Bezug auf Fig. 2 beschrieben ist, gesteuert werden. Die Fertigungsmaschine 100 kann ferner eine Abtastvorrichtung 17 aufweisen, die eine Kamera aufweist, mittels der durch den Energieeinbringungsabschnitt 11 oder ein separates Fenster die Fertigungsmaterialschicht optisch überwacht werden kann.

Die erfindungsgemäße Fertigungsmaschine 100 kann durch eine Bestimmung der Fließfähigkeit des Fertigungsmaterials und eine Überwachung der Ausbildung der Materialschicht eine vorteilhafte Steuerung ermöglichen, so dass Fertigungsmaterialien unterschiedlicher Fließfähigkeit unter unterschiedlichen Gravitationsbedingungen mit der Fertigungsmaschine 100 verwendet werden können.

**Patentansprüche**

1. Fertigungsmaschine (100) für additive Fertigungsverfahren, umfassend:

   - eine eine Wandung (10b) aufweisende geschlossene Fertigungskammer (10) mit einem Fertigungsraum (10d) zur Aufnahme von partikelförmigem Fertigungsmaterial, wobei die Fertigungskammer (10) an dessen Wandung mindestens einen Energieeinbringungsabschnitt (11) aufweist, wobei durch den mindestens einen Energieeinbringungsabschnitt (11) Umwandlungsenergie mindestens einer Energiequelle (12) in den Fertigungsraum (10d) einbringbar ist,
   - mindestens eine Zuführvorrichtung zum Zuführen von partikelförmigem Fertigungsmaterial in den Fertigungsraum (10d),
   - mindestens eine in der Fertigungskammer (10) angeordnete Fertigungsplattform (14), an der Fertigungsmaterial ablagerbar ist, wobei die Fertigungsplattform (14) in der Fertigungskammer (10) verfahrbar ist, um Fertigungsmaterial zu formen, und wobei die Fertigungsplattform (14) den Fertigungsraum (10d) zumindest teilweise begrenzt, und
   - mindestens eine Antriebsvorrichtung, mit der die Fertigungskammer (10) oder ein Teil der Fertigungskammer (10) bezüglich mindestens eines Freiheitsgrads bewegbar ist, sodass das Fertigungsmaterial in einen gewünschten Bereich in den Fertigungsraum gelangt und homogen im gewünschten Bereich verteilt wird.

2. Fertigungsmaschine (100) nach Anspruch 1, **dadurch gekennzeichnet, dass** der Teil der Fertigungskammer (10), der bezüglich mindestens eines Freiheitsgrads bewegbar ist, ein Wandabschnitt der Fertigungskammer ist, der vorzugsweise der Fertigungsplattform (14) gegenüber liegt, und/oder dass die Wandung der Fertigungskammer (10) starr ausgebildet ist.

3. Fertigungsmaschine (100) nach einem der Ansprüche 1 oder 2, **dadurch gekennzeichnet, dass** die Fertigungskammer (10) oder der Teil der Fertigungskammer (10) durch die Antriebsvorrichtung bezüglich mindestens eines rotatorischen Freiheitsgrads rotatorisch bewegbar ist und bezüglich mindestens eines translatorischen Freiheitsgrades translatorisch bewegbar ist, und/oder dass die Fertigungskammer (10) durch die Antriebsvorrichtung bezüglich mindestens zwei translatorischer Freiheitsgrade translatorisch bewegbar ist.

4. Fertigungsmaschine (100) nach einem der Ansprüche 1 bis 3, **dadurch gekennzeichnet, dass** die Fertigungsplattform (14) iterativ um vordefinierte Verfahrwege verfahrbar ist, wobei die vordefinierten Verfahrwege durch einen Benutzer anpassbar sind und/oder dass mittels der Energiequelle (12) Fertigungsmaterial in der Fertigungskammer (10) selektiv aktivierbar ist.

5. Fertigungsmaschine (100) nach einem der Ansprüche 1 bis 4, **dadurch gekennzeichnet, dass** eine Abschlussplatte (16) die Fertigungskammer (10) verschließt, wobei die Abschlussplatte (16) bewegbar ist und die Abschlussplatte (16) das Fertigungsmaterial in Richtung des Fertigungsraums (10d) drückt, wobei vorzugsweise die Abschlussplatte (16) zum Einbringen von Scherkräften in das Fertigungsmaterial rotatorisch antreibbar ist.

6. Fertigungsmaschine (100) nach einem der Ansprüche 1 bis 5, **dadurch gekennzeichnet, dass** die Zuführvorrichtung eine Zuführeinrichtung (13), vorzugsweise in Form eines Schneckenfördersystems, umfasst.

7. Fertigungsmaschine (100) nach einem der Ansprüche 1 bis 6, **dadurch gekennzeichnet, dass** die Fertigungskammer (10) einen Zylinderkörper (10a) umfasst, wobei zwischen der Wandung (10b) der Fertigungskammer (10) und dem Zylinderkörper (10a) ein Zwischenraum (10c) gebildet ist, wobei vorzugsweise an der Wandung (10b) der Fertigungskammer (10) die Zuführeinrichtung (13) angeordnet ist,

8. Fertigungsmaschine (100) nach Anspruch 7, **dadurch gekennzeichnet, dass** der Zylinderkörper (10a) zum Einbringen von Scherkräften in das Fertigungsmaterial rotatorisch antreibbar ist.

9. Fertigungsmaschine (100) nach einem der vorangegangenen Ansprüche, **gekennzeichnet durch** eine Überwachungseinrichtung, die die Fließfähigkeit des Fertigungsmaterials ermittelt, wobei vorzugsweise die Überwachungseinrichtung die Fließfähigkeit des Fertigungsmaterials anhand mindestens einer Kennzahl mindestens einer Antriebseinheit, vorzugsweise anhand des Stromverbrauchs der oder einer der Antriebseinheiten der Zuführeinrichtung (13), des Zylinderkörpers (10a) und/oder der Abschlussplatte (16), ermittelt und/oder wobei vorzugsweise anhand der von der Überwachungseinrichtung ermittelten Fließfähigkeit Fertigungsparameter der Fertigungsmaschine (100) automatisch anpassbar sind.

10. Fertigungsmaschine (100) nach einem der Ansprüche 1 bis 9, **gekennzeichnet durch** mindestens eine Abtastvorrichtung (17) zur Überwachung einer abgelagerten Fertigungsmaterialschicht, wobei vorzugsweise die die Abtastvorrichtung (17) eine optische Abtastvorrichtung ist, die die abgelagerte Fertigungsmaterialschicht durch den Energieeinbringungsabschnitt (11) oder ein separates Fenster in der Wandung (10b) der Fertigungskammer (10) optisch abtastet und/oder wobei vorzugsweise anhand von durch die mindestens eine Abtastvorrichtung (16) ermittelten Informationen über die abgelagerte Fertigungsmaterialschicht Fertigungsparameter der Fertigungsmaschine (100) automatisch anpassbar sind.

11. Additives Fertigungsverfahren mit den folgenden Schritten:

a) Verfahren einer in einer geschlossenen und vorzugsweise starren Fertigungskammer (10) angeordneten und verfahrbaren Fertigungsplattform (14) in eine Ablagerungsstellung, wobei zwischen der Fertigungsplattform (14) und einer Wandung (10b) der Fertigungskammer (10) ein Fertigungsraum (10d) für eine Fertigungsmaterial-Schicht gebildet wird,
b) Einleiten von Fertigungsmaterial für die Fertigungsmaterial-Schicht in den Fertigungsraum (10d) durch eine Zuführvorrichtung,
c) Ablagern des Fertigungsmaterials an der Fertigungsplattform (14), wobei die Fertigungsplattform (14) den Fertigungsraum (10d) zumindest teilweise begrenzt,

d) Homogenisieren des an der Fertigungsplattform (14) abgelagerten Fertigungsmaterials durch Bewegen der Fertigungskammer (10) oder eines Teils der Fertigungskammer (10), wobei die Fertigungsmaterial-Schicht ausgebildet wird,
e) Aktivieren der Fertigungsmaterial-Schicht durch Einleiten von Umwandlungsenergie in den Fertigungsraum (10d), wobei die Umwandlungsenergie durch einen Energieeinbringungsabschnitt (11) der Fertigungskammer (10) von außerhalb der Fertigungskammer (10) in den Fertigungsraum (10d) der Fertigungskammer (10) eingebracht wird,
f) Wiederholen der Schritte a) bis e) für weitere Fertigungsmaterial-Schichten, wobei das Ablagern des Fertigungsmaterials in Schritt c) an der Fertigungsplattform (14) und/oder an einer zuvor gefertigten Fertigungsmaterial-Schicht bzw. an zuvor gefertigte Fertigungsmaterial-Schichten erfolgt, bis eine vordefinierte Abbruchbedingung erfüllt ist, vorzugsweise bis zur Fertigstellung einer vordefinierten Anzahl von Fertigungsmaterial-Schichten oder bis zur Fertigstellung eines Bauteils (200).

12. Verfahren nach Anspruch 11, **dadurch gekennzeichnet, dass** der Abstand zwischen dem Energieeinbringungsabschnitt und der Fertigungsplattform in einer jeweiligen Ablagerungsstellung, die für eine Fertigungsmaterial-Schicht vorgesehen ist, an eine vordefinierte Dicke der jeweiligen Fertigungsmaterial-Schicht und Dicken von zuvor gefertigten Fertigungsmaterial-Schichten angepasst ist und vorzugsweise größer ist, als die Summe der vordefinierten Dicke der jeweiligen Fertigungsmaterial-Schicht und der Dicken von zuvor gefertigten Fertigungsmaterial-Schichten und/oder dass während des Verfahrens die jeweiligen Fertigungsmaterial-Schicht, vorzugsweise durch optisches Abtasten, überwacht wird.

13. Verfahren nach einem der Ansprüche 11 oder 12, **gekennzeichnet durch** ein Komprimieren der ersten Fertigungsmaterial-Schicht nach Schritt d), wobei die Fertigungsplattform (14) in eine erste Umwandlungsstellung verfahren wird und/oder **dadurch gekennzeichnet, dass** die eine Fertigungsmaterial-Schicht nach dem Aktivieren in Schritt e) gekühlt wird, um die eine Fertigungsmaterial-Schicht zu verfestigen.

14. Verfahren nach einem der Ansprüche 11 bis 13, **dadurch gekennzeichnet, dass** das Einleiten von Fertigungsmaterial durch eine Zuführvorrichtung erfolgt, die eine Zuführeinrichtung in Form eines Schneckenfördersystems umfasst, und/oder dass die Homogenisierung des Fertigungsmaterials ein Vibrieren der Fertigungskammer (10) oder eines Teils der Fertigungskammer (10) umfasst.

15. Verfahren nach einem der Ansprüche 11 bis 14, **dadurch gekennzeichnet, dass** das Aktivieren des Fertigungsmaterials in Schritt e) durch selektives Einbringen von Umwandlungsenergie selektiv erfolgt und/oder dass während dem Einleiten von Fertigungsmaterial in Schritt b) die Fließfähigkeit des Fertigungsmaterials ermittelt wird, wobei vorzugsweise Fertigungsparameter des Verfahrens automatisch anpasst werden, wenn sich die ermittelte Fließfähigkeit des Fertigungsmaterials verändert.

**Claims**

1. Manufacturing machine (100) for additive manufacturing methods, comprising:

   - a closed manufacturing chamber (10) with a manufacturing space (10d) for receiving particulate manufacturing material and having a wall (10b), the manufacturing chamber (10) comprising at least one energy introduction section (11), wherein transformation energy of at least one energy source (12) can be introduced into the manufacturing space (10d) via the at least one energy introduction section (11),
   - at least one supply device for supplying particulate manufacturing material into the manufacturing space (10d),
   - at least one manufacturing platform (14) arranged in the manufacturing chamber (10), on which manufacturing material can be deposited, wherein the manufacturing platform (14) is displaceable in the manufacturing chamber (10) to shape manufacturing material, and wherein the manufacturing platform (14) at least partially delimits the manufacturing space (10d), and
   - at least one drive device by which the manufacturing chamber (10) or a part of the manufacturing chamber (10) is movable with respect to at least one degree of freedom, so that the manufacturing material gets into the manufacturing space in a desired area and is homogeneously distributed in the desired area.

2. Manufacturing machine (100) according to claim 1, **characterized in that** the part of the manufacturing chamber (10) that is movable with respect to at least one degree of freedom is a wall section of the manufacturing chamber which is preferably opposite the manufacturing platform (14), and/or **in that** the manufacturing chamber (10) is of rigid design.

3. Manufacturing machine (100) according to one of claims 1 or 2, **characterized in that** by the drive device, the manufacturing chamber (10) or the part of the manufacturing chamber (10) is rotationally movable with respect to at least one rotational degree of freedom and is translationally movable with respect to at least one translational degree of freedom, and/or **in that** by the drive device, the manufacturing chamber (10) is translationally movable with respect to at least two translational degrees of freedom.

4. Manufacturing machine (100) according to one of claims 1 to 3, **characterized in that** the manufacturing platform (14) is iteratively displaceable by predefined travels, wherein the predefined travels can be adapted by a user and/or **in that** manufacturing material can be selectively activated in the manufacturing chamber (10) by means of the energy source (12).

5. Manufacturing machine (100) according to one of claims 1 to 4, **characterized in that** a cover plate (16) closes the manufacturing chamber (10), wherein the cover plate (16) is movable, and the cover plate (16) presses the manufacturing material towards the manufacturing space (10d), wherein preferably the cover plate (16) is rotationally drivable to introduce shear forces into the manufacturing material.

6. Manufacturing machine (100) according to one of claims 1 to 5, **characterized in that** the supply device comprises a supply means (13), preferably in the form of a screw conveyor system.

7. Manufacturing machine (100) according to one of claims 1 to 6, **characterized in that** the manufacturing chamber (10) comprises a cylinder body (10a), wherein an interstice (10c) is formed between the wall (10b) of the manufacturing chamber (10) and the cylinder body (10a), wherein the supply device (13) ais arranged preferably at the wall (10b) of the manufacturing chamber (10).

8. Manufacturing machine (100) according to claim 7, **characterized in that** the cylinder body (10a) is rotationally drivable to introduce shear forces into the manufacturing material.

9. Manufacturing machine (100) of one of the preceding claims, **characterized by** a monitoring means determining the flowability of the manufacturing material, herein preferably the monitoring device determines the flowability of the manufacturing material based on at least one coefficient of at least one drive unit, preferably based on the power consumption of the or one of the drive units of the supply means (13), the cylinder body (10a) and/or the cover plate (16), and/or wherein preferably manufacturing parameters of the manufacturing machine (100) can be adjusted automatically based on the flowability determined by the monitoring means.

10. Manufacturing machine (100) according to one of claims 1 to 9, **characterized by** at least one scanning device (17) for monitoring a deposited manufacturing material layer, wherein preferably the scanning device (17) is an optical scanning device which optically scans the deposited manufacturing material layer through the energy introduction section (11) or a separate window in the wall (10b) of the manufacturing chamber (10) and/or wherein preferably based on information on the deposited manufacturing material layer obtained by the at least one scanning device (16), manufacturing parameters of the manufacturing machine (100) can be automatically adjusted.

11. Additive manufacturing method comprising the following steps:

    a) moving a manufacturing platform (14) arranged and displaceable in a closed and preferably rigid manufacturing chamber (10) to a depositing position, a manufacturing space for a manufacturing material layer being formed between the manufacturing platform (14) and a wall (10b) of the manufacturing chamber (10),
    b) introducing manufacturing material for the manufacturing material layer into the manufacturing space (10d) through a supply device,
    c) depositing the manufacturing material at the manufacturing platform (14), the manufacturing platform (14) delimiting the manufacturing space (10d) at least in part,
    d) homogenizing the manufacturing material deposited at the manufacturing platform (14) by moving the manufacturing chamber (10) or a part of the manufacturing chamber (10), thereby forming the manufacturing material layer,
    e) activating the manufacturing material layer by introducing transformation energy into the manufacturing space (10d), the transformation energy being introduced into the manufacturing space (10d) of the manufacturing chamber (10) from outside the manufacturing chamber (10) via an energy introduction section (11) of the manufacturing chamber (10),
    f) repeating steps a) to e) for further manufacturing material layers, wherein depositing the manufacturing material in step c) at the manufacturing platform (14) and/or at a previously formed manufacturing material layer or previously formed manufacturing material layers is performed until a predefined termination condition is met, preferably until the completion of a predefined number of manufacturing material layers or until the completion of a component (200).

12. Method according to claim 11, **characterized in that** the distance between the energy introduction section and the manufacturing platform in a respective deposition position provided for a manufacturing material layer is adapted to a predefined thickness of the respective manufacturing material layer and thicknesses of previously formed manufacturing material layers and is preferably larger than the sum of the predefined thicknesses of the respective manufacturing material layer and the thicknesses of previously formed manufacturing material layers and/or **in that** during the process, the respective manufacturing material layer is monitored, preferably by optical scanning.

13. Method according to claim 11 or 12, **characterized by** a compression of the first manufacturing material layer according to step d), the manufacturing platform (14) being moved into a first transformation position and/or **characterized in that** the one manufacturing material layer is cooled after activation in step e) to solidify the one manufacturing material layer.

14. Method according to one of claims 11 to 13, **characterized in that** the introduction of manufacturing material occurs via a supply device comprising a supply means in the form of a screw conveyor system, and/or **in that** the homogenization of the manufacturing material comprises vibrating the manufacturing chamber (10) or a part of the manufacturing chamber (10).

15. Method according to one of claims 11 to 14, **characterized in that** activating the manufacturing material in step e) is performed selectively by selective introduction of transformation energy and/or **in that** during the introduction of manufacturing material in step b), the flowability of the manufacturing material is determined, wherein preferably manufacturing parameters of the process are adjusted automatically when the determined flowability of the manufacturing material changes.

**Revendications**

1. Machine de fabrication (100) pour procédé additif de fabrication, comprenant :

    - une chambre de fabrication (10) fermée comportant une paroi (10b), dotée d'un espace de fabrication (10d) destiné à accueillir un matériau de fabrication sous forme de particules, dans laquelle la chambre de fabrication (10) comporte sur sa paroi au moins une section d'apport d'énergie (11), dans laquelle de l'énergie de conversion d'au moins une source d'énergie (12) peut être apportée dans l'espace de fabrication (10d) par l'au moins une section d'apport d'énergie (11),

- au moins un dispositif d'alimentation destiné à alimenter l'espace de fabrication (10d) en matériau de fabrication sous forme de particules,
- au moins une plateforme de fabrication (14) disposée dans la chambre de fabrication (10), sur laquelle le matériau de fabrication peut se déposer, dans laquelle la plateforme de fabrication (14) est déplaçable dans la chambre de fabrication (10) afin de façonner le matériau de fabrication, et dans laquelle la plateforme de fabrication (14) délimite au moins en partie l'espace de fabrication (10d), et
- au moins un dispositif d'entraînement, grâce auquel la chambre de fabrication (10) ou une partie de la chambre de fabrication (10) est mobile selon au moins un degré de liberté, de sorte que le matériau de fabrication arrive dans une zone désirée dans l'espace de fabrication et est réparti de manière homogène dans la zone désirée.

2. Machine de fabrication (100) selon la revendication 1, **caractérisée en ce que** la partie de la chambre de fabrication (10) mobile selon au moins un degré de liberté est une section de paroi de la chambre de fabrication qui fait de préférence face à la plateforme de fabrication (14), et/ou **en ce que** la paroi de la chambre de fabrication (10) est réalisée de manière rigide.

3. Machine de fabrication (100) selon la revendication 1 ou 2, **caractérisée en ce que** la chambre de fabrication (10) ou la partie de la chambre de fabrication (10) est, grâce au dispositif d'entraînement, mobile en rotation selon au moins un degré de liberté de rotation et mobile en translation selon au moins un degré de liberté de translation et/ou **en ce que** la chambre de fabrication (10) est mobile en translation selon au moins deux degrés de liberté en translation.

4. Machine de fabrication (100) selon l'une des revendications 1 à 3, **caractérisée en ce que** la plateforme de fabrication (14) est déplaçable de manière itérative sur des courses prédéfinies, dans laquelle les courses prédéfinies sont adaptables par un utilisateur et/ou **en ce que** le matériau de fabrication dans la chambre de fabrication (10) peut être activé de manière sélective au moyen de la source d'énergie (12).

5. Machine de fabrication (100) selon l'une des revendications 1 à 4, **caractérisée en ce qu'**une plaque d'obturation (16) ferme la chambre de fabrication (10), dans laquelle la plaque d'obturation (16) est mobile et la plaque d'obturation (16) pousse le matériau de fabrication en direction de l'espace de fabrication (10d), dans laquelle la plaque d'obturation (16) est de préférence entraînable en rotation afin d'exercer des forces de cisaillement sur le matériau de fabrication.

6. Machine de fabrication (100) selon l'une des revendications 1 à 5, **caractérisée en ce que** le dispositif d'alimentation comprend un système d'alimentation (13), de préférence sous forme d'un convoyeur à vis.

7. Machine de fabrication (100) selon l'une des revendications 1 à 6, **caractérisée en ce que** la chambre de fabrication (10) comprend un corps cylindrique (10a), dans laquelle un espace intermédiaire (10c) est formé entre la paroi (10b) de la chambre de fabrication (10) et le corps cylindrique (10a), dans laquelle le système d'alimentation (13) est de préférence disposé sur la paroi (10b) de la chambre de fabrication (10).

8. Machine de fabrication (100) selon la revendication 7, **caractérisée en ce que** le corps cylindrique (10a) est entraînable en rotation afin d'exercer des forces de cisaillement sur le matériau de fabrication.

9. Machine de fabrication (100) selon l'une des revendications précédentes, **caractérisée par** un dispositif de contrôle, lequel détermine la fluidité du matériau de fabrication, dans lequel le dispositif de contrôle détermine de préférence la fluidité du matériau de fabrication à l'aide d'au moins un indicateur d'au moins une unité d'entraînement, de préférence à l'aide de la consommation électrique de la ou des unités d'entraînement du système d'alimentation (13), du corps cylindrique (10a) et/ou de la plaque d'obturation (16), et/ou dans lequel des paramètres de fabrication de la machine de fabrication (100) peuvent de préférence être automatiquement adaptés à l'aide de la fluidité déterminée par le dispositif de contrôle.

10. Machine de fabrication (100) selon l'une des revendications 1 à 9, **caractérisée par** au moins un dispositif de balayage (17) destiné à contrôler une couche déposée de matériau de fabrication, dans laquelle le dispositif de balayage (17) est de préférence un dispositif de balayage optique, lequel effectue un balayage optique de la couche déposée de matériau de fabrication à travers la section d'apport d'énergie (11) ou une fenêtre séparée dans la paroi (10b) de la chambre de fabrication (10) et/ou dans laquelle des paramètres de fabrication de la machine de fabrication (100) peuvent de préférence être automatiquement adaptés à l'aide des informations sur la couche déposée de matériau de fabrication déterminées par l'au moins un dispositif de balayage (17).

11. Procédé additif de fabrication avec les étapes suivantes :

a) Déplacement d'une plateforme de fabrication (14) déplaçable et disposée dans une chambre de fabrication (10) fermée et de préférence rigide dans une position de dépôt, dans lequel un espace de fabrication (10d) pour une couche de matériau de fabrication est formé entre la plateforme de fabrication (14) et une paroi (10b) de la chambre de fabrication (10),
b) Introduction dans l'espace de fabrication (10d) de matériau de fabrication pour la couche de matériau de fabrication par un dispositif d'alimentation,
c) Dépôt du matériau de fabrication sur la plateforme de fabrication (14), dans lequel la plateforme de fabrication (14) délimite au moins partiellement l'espace de fabrication (10d),
d) Homogénéisation du matériau de fabrication déposé sur la plateforme de fabrication (14) par mouvement de la chambre de fabrication (10) ou d'une partie de la chambre de fabrication (10), dans lequel la couche de matériau de fabrication est réalisée,
e) Activation de la couche de matériau de fabrication par introduction d'énergie de conversion dans l'espace de fabrication (10d), dans lequel l'énergie de conversion est apportée dans l'espace de fabrication (10d) de la chambre de fabrication (10) depuis l'extérieur de la chambre de fabrication (10) par le biais d'une section d'apport d'énergie (11) de la chambre de fabrication (10),
f) Répétition des étapes a) à e) pour des couches ultérieures de matériau de fabrication, dans lequel le dépôt du matériau de fabrication dans l'étape c) s'effectue sur la plateforme de fabrication (14) et/ou sur une ou des couche(s) de matériau de fabrication précédemment terminée(s), jusqu'à ce qu'une condition d'arrêt prédéfinie soit remplie, de préférence jusqu'à la finalisation d'un nombre prédéfini de couches de matériau de fabrication ou jusqu'à la finalisation d'une pièce (200).

12. Procédé selon la revendication 11, **caractérisé en ce que** la distance entre la section d'apport d'énergie et la plateforme de fabrication dans une position de dépôt respectivement prévue pour une couche de matériau de fabrication est adaptée à une épaisseur prédéfinie de la couche respective de matériau de fabrication et aux épaisseurs des couches de matériau de fabrication précédemment terminées et est de préférence supérieure à la somme de l'épaisseur prédéfinie de la couche respective de matériau de fabrication et aux épaisseurs des couches de matériau de fabrication précédemment terminées et/ou **en ce que** pendant le procédé la couche respective de matériau de fabrication est contrôlée, de préférence par balayage optique.

13. Procédé selon l'une des revendications 11 ou 12, **caractérisé par** une compression de la première couche de matériau de fabrication selon l'étape d), dans lequel la plateforme de fabrication (14) est déplacée dans une première position de conversion et/ou **caractérisé en ce que** l'une couche de matériau de fabrication est refroidie après l'activation de l'étape e), afin de solidifier l'une couche de matériau de fabrication.

14. Procédé selon l'une des revendications 11 à 13, **caractérisé en ce que** l'introduction de matériau de fabrication s'effectue par un dispositif d'alimentation, lequel comprend un système d'alimentation sous forme d'un convoyeur à vis, et/ou **en ce que** l'homogénéisation du matériau de fabrication comprend une vibration de la chambre de fabrication (10) ou d'une partie de la chambre de fabrication (10).

15. Procédé selon l'une des revendications 11 à 14, **caractérisé en ce que** l'activation du matériau de fabrication à l'étape e) s'effectue de manière sélective par apport sélectif d'énergie de conversion et/ou **en ce que** pendant l'introduction de matériau de fabrication à l'étape d) la fluidité du matériau de fabrication est déterminée, dans lequel les paramètres de fabrication du procédé sont de préférence automatiquement adaptés lorsque la fluidité déterminée du matériau de fabrication varie.

Fig. 1

100

10

10a

16

10b

13

10c

15

14

10d

11

12, 17

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5121329 A
- US 4863538 A
- US 5204055 A
- US 6476343 B2
- US 6046426 A
- WO 2014053277 A2
- DE 102017207769 A1
- DE 102016201086 A1
- US 20070145629 A1
- WO 2019169511 A1
- EP 3281729 A1
- US 9656426 B2
- DE 102012109262 A1